(19) **Europäisches Patentamt European Patent Office Office européen des brevets**

(11) **EP 4 629 532 A1**

(12) **EUROPEAN PATENT APPLICATION**
published in accordance with Art. 153(4) EPC

(43) Date of publication:
08.10.2025 Bulletin 2025/41

(21) Application number: 23906056.9

(22) Date of filing: 21.12.2023

(51) International Patent Classification (IPC):
*H04B 17/373* (2015.01)

(52) Cooperative Patent Classification (CPC):
H04B 7/06; H04B 17/373; H04B 17/391

(86) International application number:
PCT/CN2023/140701

(87) International publication number:
WO 2024/131900 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.12.2022 CN 202211668669

(71) Applicant: Huawei Technologies Co., Ltd.
Shenzhen, Guangdong 518129 (CN)

(72) Inventors:
• JIN, Yu
Shenzhen, Guangdong 518129 (CN)
• CHAI, Xiaomeng
Shenzhen, Guangdong 518129 (CN)
• TIAN, Yang
Shenzhen, Guangdong 518129 (CN)
• SUN, Yan
Shenzhen, Guangdong 518129 (CN)
• PANG, Jiyong
Shenzhen, Guangdong 518129 (CN)

(74) Representative: Epping - Hermann - Fischer
Patentanwaltsgesellschaft mbH
Schloßschmidstraße 5
80639 München (DE)

(54) **COMMUNICATION METHOD AND COMMUNICATION APPARATUS**

(57) Embodiments of this application provide a communication method and a communication apparatus. The method includes: receiving a first reference signal from a first device; determining whether p pieces of predicted channel information are valid; and sending first indication information to the first device, where the first indication information indicates at least one piece of channel information, and when it is determined that the p pieces of predicted channel information are valid, the at least one piece of channel information includes the p pieces of predicted channel information; or when it is determined that the p pieces of predicted channel information are invalid, the at least one piece of channel information includes channel information measured based on the first reference signal and the p pieces of predicted channel information, or the at least one piece of channel information includes the channel information measured based on the first reference signal, p is a positive integer, and a moment corresponding to the p pieces of predicted channel information is not earlier than a sending moment of the first indication information. According to the solutions in embodiments of this application, channel information obtained by the first device can accurately reflect a channel status.

FIG. 5

## Description

This application claims priority to Chinese Patent Application No. 202211668669.9, filed with the China National Intellectual Property Administration on December 23, 2022 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In a communication system, a network device needs to determine, based on a channel state information (channel state information, CSI) parameter, related configuration information such as a resource, a modulation and coding scheme (modulation and coding scheme, MCS), and precoding that are used to schedule a downlink data channel for a terminal device.

Channel aging means that a current channel is different from a channel used during measurement due to a processing delay or relative motion between a terminal device and a network device. For example, currently, when the terminal device moves at a high speed, due to a fast channel change caused by multipath fading, CSI obtained by the network device becomes outdated due to fast fading. The channel aging has a serious negative impact on various adaptive transmission systems. CSI prediction helps alleviate the channel aging. The CSI prediction means that future CSI is predicted with reference to historical CSI by using correlations of a channel in time domain, frequency domain, and space domain.

However, in an actual scenario, predicted CSI possibly cannot accurately reflect actual channel quality, affecting accuracy of a subsequent related configuration of the network device. For example, when the terminal device feeds back CSI, if an artificial intelligence (artificial intelligence, AI) prediction model is deployed on the terminal device, the terminal device may feed back, to the network device, CSI predicted by the AI prediction model. However, when a distribution difference between training data of the AI prediction model and current data of the AI prediction model is large, performance of the AI prediction model is affected, affecting accuracy of the predicted CSI. When the accuracy of the predicted CSI is low, the CSI prediction cannot bring a performance gain, and even affects the subsequent related configuration of the network device, resulting in performance deterioration.

## SUMMARY

Embodiments of this application provide a communication method and a communication apparatus, to expect that channel information obtained by a related device can accurately reflect a channel status.

According to a first aspect, a communication method is provided. The method may be performed by a second device, or may be performed by a chip or a circuit disposed in the second device. This is not limited in this application. For example, the second device may be a terminal device. For another example, the second device may be a network device.

The method includes: receiving a first reference signal from a first device; determining whether $p$ pieces of predicted channel information are valid; and sending first indication information to the first device, where the first indication information indicates at least one piece of channel information, and when it is determined that the $p$ pieces of predicted channel information are valid, the at least one piece of channel information includes the $p$ pieces of predicted channel information; or when it is determined that the $p$ pieces of predicted channel information are invalid, the at least one piece of channel information includes channel information measured based on the first reference signal and the $p$ pieces of predicted channel information, or the at least one piece of channel information includes the channel information measured based on the first reference signal, where $p$ is a positive integer, and a moment corresponding to the $p$ pieces of predicted channel information is not earlier than a sending moment of the first indication information.

In the solution of this embodiment of this application, content fed back to the first device, that is, content indicated by the first indication information, is determined based on whether the $p$ pieces of predicted channel information are valid, to expect that channel information obtained by the first device can accurately reflect a channel status. For example, when the $p$ pieces of predicted channel information are invalid, the channel information fed back to the first device includes at least the channel information measured based on the first reference signal. In this way, the first device can obtain channel information that can more accurately reflect the channel status, to avoid performance deterioration that may be caused when the first device performs data transmission based on inaccurately predicted channel information. For another example, when the $p$ pieces of predicted channel information are valid, the $p$ pieces of predicted channel information may be fed back to the first device, so that the first device can perform data transmission based on the predicted channel information, to alleviate a channel aging problem. In addition, when the $p$ pieces of predicted channel information are invalid, a part of the $p$ pieces of predicted channel information may be accurate. The second device may feed back, to the first device, the channel information measured based on the first reference signal and the $p$ pieces of predicted channel information, so that the first device can perform subsequent processing based on the $p$ pieces of predicted channel information.

For example, the channel information may be predicted in a plurality of manners. For example, the channel information may be predicted in one or more of the following manners: linear fitting, Kalman filtering, an AI model, or the like. An AI model-based prediction manner is used as an example. Channel information measured at one or more historical moments is input into an AI prediction model, and the AI prediction model outputs channel information at one or more future moments.

With reference to the first aspect, in some implementations of the first aspect, determining whether the p pieces of predicted channel information are valid includes: determining, based on a comparison result between n pieces of predicted channel information and n pieces of measured channel information, whether the p pieces of predicted channel information are valid, where the n pieces of predicted channel information are corresponding to the n pieces of measured channel information, n is a positive integer, and a moment corresponding to the n pieces of predicted channel information is earlier than the sending moment of the first indication information.

In the solution of this embodiment of this application, the comparison result between the n pieces of predicted channel information and the n pieces of measured channel information may be used to reflect accuracy of channel information prediction. In this way, whether the p pieces of predicted channel information are valid can be determined based on the accuracy of the channel information prediction, and the content indicated by the first indication information can be further determined, to expect that the channel information obtained by the first device can accurately reflect the channel status. For example, if the channel information prediction is accurate, it may be determined that the p pieces of predicted channel information are valid. For another example, if the channel information prediction is inaccurate, it may be determined that the p pieces of predicted channel information are invalid.

With reference to the first aspect, in some implementations of the first aspect, an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

For example, the first threshold may be predefined, or may be indicated by the first device, or may be determined by the second device.

In the solution of this embodiment of this application, a moment corresponding to measured channel information is close to a moment corresponding to predicted channel information having a correspondence with the measured channel information, so that interference of a time factor to the comparison result is avoided as much as possible, and the comparison result obtained in this case has higher reference value and can more accurately reflect the accuracy of the channel information prediction.

With reference to the first aspect, in some implementations of the first aspect, the n pieces of measured channel information include the channel information measured based on the first reference signal.

For channel information used for comparison, a moment closer to the moment corresponding to the p pieces of predicted channel information indicates that a comparison result of the channel information used for comparison can better reflect accuracy of a prediction result near the moment corresponding to the p pieces of predicted channel information. The moment corresponding to the p pieces of predicted channel information is not earlier than the sending moment of the first indication information. The first reference signal may be a reference signal at a moment closest to the sending moment of the first indication information, and the channel information measured based on the first reference signal can more accurately reflect the channel status at the sending moment of the first indication information. In the solution of this embodiment of this application, the n pieces of measured channel information include the channel information measured based on the first reference signal. This helps determine the accuracy of the channel information prediction near the moment corresponding to the p pieces of predicted channel information, and helps more accurately determine whether the p pieces of predicted channel information are valid, to help ensure that the first device obtains more accurate channel information.

With reference to the first aspect, in some implementations of the first aspect, the comparison result between the n pieces of predicted channel information and the n pieces of measured channel information includes any one of the following: a difference between the n pieces of predicted channel information and the n pieces of measured channel information, or a channel correlation between the n pieces of predicted channel information and the n pieces of measured channel information.

With reference to the first aspect, in some implementations of the first aspect, the difference between the n channel information prediction results and the n channel information measurement results includes at least one of the following: a mean square error between the n channel information prediction results and the n channel information measurement results, or a normalized error between the n channel information prediction results and the n channel information measurement results.

With reference to the first aspect, in some implementations of the first aspect, the channel correlation between the n channel information prediction results and the n channel information measurement results includes at least one of the following: a generalized cosine similarity between the n channel information prediction results and the n channel information measurement results, or a squared generalized cosine similarity between the n channel information prediction results and the n channel information measurement results.

With reference to the first aspect, in some implementations of the first aspect, the p pieces of predicted channel information are obtained through prediction based on m pieces of measured channel information, and m is a positive integer.

The m pieces of measured channel information may be completely or partially the same as the n pieces of measured channel information. Alternatively, the m pieces of measured channel information may be completely different from the n pieces of measured channel information. This is not limited in this embodiment of this application.

With reference to the first aspect, in some implementations of the first aspect, the m pieces of measured channel information include the channel information measured based on the first reference signal.

For measured channel information used to predict channel information at a future moment, a moment closer to a moment at which prediction needs to be performed usually indicates higher accuracy of predicted channel information. The moment corresponding to the p pieces of predicted channel information is not earlier than the sending moment of the first indication information. In the solution of this embodiment of this application, the first reference signal may be a reference signal at a moment closest to the sending moment of the first indication information, and a moment corresponding to the channel information measured based on the first reference signal is closer to the moment corresponding to the p pieces of predicted channel information. The n pieces of measured channel information include the channel information measured based on the first reference signal, that is, the channel information measured based on the first reference signal is used to determine the p pieces of predicted channel information, so that the p pieces of predicted channel information are more accurate.

With reference to the first aspect, in some implementations of the first aspect, the first indication information further indicates a label of the at least one piece of channel information, and the label of the at least one piece of channel information respectively indicates that the at least one piece of channel information is a prediction result or a measurement result.

With reference to the first aspect, in some implementations of the first aspect, when the at least one piece of channel information includes the p pieces of predicted channel information or the at least one piece of channel information includes the channel information measured based on the first reference signal and the p pieces of predicted channel information, the first indication information further indicates the moment corresponding to the p pieces of predicted channel information.

With reference to the first aspect, in some implementations of the first aspect, the method further includes: sending second indication information to the first device, where the second indication information indicates the comparison result.

With reference to the first aspect, in some implementations of the first aspect, n=1, and it is determined that the p pieces of predicted channel information are invalid when the comparison result between the n pieces of predicted channel information and the n pieces of measured channel information satisfies any one of the following:

the difference between the n pieces of predicted channel information and the n pieces of measured channel information is greater than or equal to a threshold corresponding to the difference;

the channel correlation between the n pieces of predicted channel information and the n pieces of measured channel information is less than or equal to a threshold corresponding to the channel correlation;

the difference between the n pieces of predicted channel information and the n pieces of measured channel information is greater than or equal to a threshold corresponding to the difference, and the channel correlation between the n pieces of predicted channel information and the n pieces of measured channel information is less than or equal to a threshold corresponding to the channel correlation; or

the difference between the n pieces of predicted channel information and the n pieces of measured channel information is greater than or equal to a threshold corresponding to the difference, or the channel correlation between the n pieces of predicted channel information and the n pieces of measured channel information is less than or equal to a threshold corresponding to the channel correlation.

With reference to the first aspect, in some implementations of the first aspect, n>1, and it is determined that the p pieces of predicted channel information are invalid when the comparison result between the n pieces of predicted channel information and the n pieces of measured channel information satisfies any one of the following:

a statistic of the differences between the n pieces of predicted channel information and the n pieces of measured channel information is greater than or equal to a threshold corresponding to the differences;

a statistic of the channel correlations between the n pieces of predicted channel information and the n pieces of measured channel information is less than or equal to a threshold corresponding to the channel correlations;

a statistic of the differences between the n pieces of predicted channel information and the n pieces of measured channel information is greater than or equal to a threshold corresponding to the differences, and a statistic of the channel correlations between the n pieces of predicted channel information and the n pieces of measured channel information is less than or equal to a threshold corresponding to the channel correlations; or

a statistic of the differences between the n pieces of predicted channel information and the n pieces of measured channel information is greater than or equal to a threshold corresponding to the differences, or a statistic of the channel correlations between the n pieces of predicted channel information and the n pieces of measured channel information is less than or equal to a threshold corresponding to the channel correlations.

With reference to the first aspect, in some implementations of the first aspect, n>1, and it is determined that the p pieces of predicted channel information are invalid when the comparison result between the n pieces of predicted channel information and the n pieces of measured channel information satisfies any one of the following:

a difference between y pieces of predicted channel information in the n pieces of predicted channel information and y pieces of measured channel information in the n pieces of measured channel information is greater than or equal to a threshold corresponding to the difference, where a ratio of y to n is greater than or equal to a second threshold, y is an integer greater than or equal to 0, and the y pieces of predicted channel information are corresponding to the y pieces of measured channel information;

a channel correlation between y pieces of predicted channel information in the n pieces of predicted channel information and y pieces of measured channel information in the n pieces of measured channel information is less than or equal to a threshold corresponding to the channel correlation, where a ratio of y to n is greater than or equal to a second threshold, y is an integer greater than or equal to 0, and the y pieces of predicted channel information are corresponding to the y pieces of measured channel information;

a difference between y pieces of predicted channel information in the n pieces of predicted channel information and y pieces of measured channel information in the n pieces of measured channel information is greater than or equal to a threshold corresponding to the difference, and a channel correlation between the y pieces of predicted channel information and the y pieces of measured channel information is less than or equal to a threshold corresponding to the channel correlation, where a ratio of y to n is greater than or equal to a second threshold, y is an integer greater than or equal to 0, and the y pieces of predicted channel information are corresponding to the y pieces of measured channel information; or

a difference between y pieces of predicted channel information in the n pieces of predicted channel information and y pieces of measured channel information in the n pieces of measured channel information is greater than or equal to a threshold corresponding to the difference, or a channel correlation between the y pieces of predicted channel information and the y pieces of measured channel information is less than or equal to a threshold corresponding to the channel correlation, where a ratio of y to n is greater than or equal to a second threshold, y is an integer greater than or equal to 0, and the y pieces of predicted channel information are corresponding to the y pieces of measured channel information.

According to a second aspect, a communication method is provided. The method may be performed by a first device, or may be performed by a chip or a circuit disposed in the first device. This is not limited in this application. For example, the first device may be a terminal device. For another example, the first device may be a network device.

The method includes: sending a first reference signal to a second device; and receiving first indication information from the second device, where the first indication information indicates at least one piece of channel information, and when the p pieces of predicted channel information are valid, the at least one piece of channel information includes the p pieces of predicted channel information; or when the p pieces of predicted channel information are invalid, the at least one piece of channel information includes channel information measured based on the first reference signal and the p pieces of predicted channel information, or the at least one piece of channel information includes the channel information measured based on the first reference signal, where p is a positive integer, and a moment corresponding to the p pieces of predicted channel information is not earlier than a sending moment of the first indication information.

With reference to the second aspect, in some implementations of the second aspect, the first indication information further indicates a label of the at least one piece of channel information, and the label of the at least one piece of channel information respectively indicates that the at least one piece of channel information is a prediction result or a measurement result.

With reference to the second aspect, in some implementations of the second aspect, the method further includes: when the at least one piece of channel information includes the channel information measured based on the first reference signal, performing data transmission based on the channel information measured based on the first reference signal; or when the at least one piece of channel information does not include the channel information measured based on the first reference signal, performing data transmission based on the p pieces of predicted channel information.

With reference to the second aspect, in some implementations of the second aspect, the method further includes: determining, based on the label of the at least one piece of channel information, that the at least one piece of channel information includes the measurement result, and performing data transmission based on the channel information measured based on the first reference signal; or determining, based on the label of the at least one piece of channel information, that the at least one piece of channel information does not include the measurement result, and performing data transmission based on the p pieces of predicted channel information.

With reference to the second aspect, in some implementations of the second aspect, when the at least one piece of channel information includes the p pieces of predicted channel information or the at least one piece of channel information includes the channel information measured based on the first reference signal and the p pieces of predicted channel information, the first indication information further indicates the moment corresponding to the p pieces of predicted channel information.

With reference to the second aspect, in some implementations of the second aspect, the p pieces of predicted channel information are obtained through prediction based on m pieces of measured channel information, the m pieces of measured channel information include the channel information measured based on the first reference signal, and m is a positive integer.

With reference to the second aspect, in some implementations of the second aspect, the p pieces of predicted channel information are valid or the p pieces of predicted channel information are invalid based on a comparison result between n pieces of predicted channel information and n pieces of measured channel information, the n pieces of predicted channel information are corresponding to the n pieces of measured channel information, n is a positive integer, and a moment corresponding to the n pieces of predicted channel information is earlier than the sending moment of the first indication information.

With reference to the second aspect, in some implementations of the second aspect, an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

With reference to the second aspect, in some implementations of the second aspect, the n pieces of measured channel information include the channel information measured based on the first reference signal.

With reference to the second aspect, in some implementations of the second aspect, the comparison result between the n pieces of predicted channel information and the n pieces of measured channel information includes any one of the following: a difference between the n pieces of predicted channel information and the n pieces of measured channel information, or a channel correlation between the n pieces of predicted channel information and the n pieces of measured channel information.

According to a third aspect, a communication method is provided. The method may be performed by a first device, or may be performed by a chip or a circuit disposed in the first device. This is not limited in this application. For example, the first device may be a terminal device. For another example, the first device may be a network device.

The method includes: receiving first indication information from a second device, where the first indication information indicates at least one piece of channel information and a label of the at least one piece of channel information, and the label of the at least one piece of channel information respectively indicates that the at least one piece of channel information is a prediction result or a measurement result; and performing data transmission based on the at least one piece of channel information.

According to the solution in this embodiment of this application, the channel information indicated by the first indication information may be a prediction result or a measurement result of the channel information, so that the first device can obtain, in different scenarios, channel information that can accurately reflect a channel status. For example, the channel information obtained by the first device includes a measurement result of the channel information. In this case, the first device can obtain channel information that can more accurately reflect a channel status at a measurement moment, to avoid performance deterioration that may be caused because the first device can perform data transmission based only on inaccurately predicted channel information. For another example, the channel information obtained by the first device includes a prediction result of the channel information. In this case, the first device can perform data transmission based on the predicted channel information, to alleviate a channel aging problem.

With reference to the third aspect, in some implementations of the third aspect, the method further includes: sending a first reference signal to the second device, where when p pieces of predicted channel information are valid, the at least one piece of channel information includes the p pieces of predicted channel information; or when p pieces of predicted channel information are invalid, the at least one piece of channel information includes channel information measured based on the first reference signal and the p pieces of predicted channel information, or at least one piece of channel information includes the channel information measured based on the first reference signal, where a moment corresponding to the p pieces of predicted channel information is not earlier than a sending moment of the first indication information, and p is a positive integer.

With reference to the third aspect, in some implementations of the third aspect, performing data transmission based on the at least one piece of channel information includes: when the at least one piece of channel information includes the channel information measured based on the first reference signal, performing data transmission based on the channel information measured based on the first reference signal; or when the at least one piece of channel information does not include the channel information measured based on the first reference signal, performing data transmission based on the p pieces of predicted channel information.

With reference to the third aspect, in some implementations of the third aspect, performing data transmission based on the at least one piece of channel information includes: determining, based on the label of the at least one piece of channel information, that the at least one piece of channel information includes the measurement result, and performing data transmission based on the channel information measured based on the first reference signal; or determining, based on the label of the at least one piece of channel information, that the at least one piece of channel information does not include the measurement result, and performing data transmission based on the p pieces of predicted channel information.

With reference to the third aspect, in some implementations of the third aspect, when the at least one piece of channel information includes the p pieces of predicted channel information or the at least one piece of channel information includes the channel information measured based on the first reference signal and the p pieces of predicted channel information, the first indication information further indicates the moment corresponding to the p pieces of predicted channel information.

With reference to the third aspect, in some implementations of the third aspect, the p pieces of predicted channel information are obtained through prediction based on m pieces of measured channel information, the m pieces of measured channel information include the channel information measured based on the first reference signal, and m is a positive integer.

With reference to the third aspect, in some implementations of the third aspect, the p pieces of predicted channel information are valid or the p pieces of predicted channel information are invalid based on a comparison result between n pieces of predicted channel information and n pieces of measured channel information, the n pieces of predicted channel information are corresponding to the n pieces of measured channel information, n is a positive integer, and a moment corresponding to the n pieces of predicted channel information is earlier than the sending moment of the first indication information.

With reference to the third aspect, in some implementations of the third aspect, an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

With reference to the third aspect, in some implementations of the third aspect, the n pieces of measured channel information include the channel information measured based on the first reference signal.

With reference to the third aspect, in some implementations of the third aspect, the comparison result between the n pieces of predicted channel information and the n pieces of measured channel information includes any one of the following: a difference between the n pieces of predicted channel information and the n pieces of measured channel information, or a channel correlation between the n pieces of predicted channel information and the n pieces of measured channel information.

With reference to the third aspect, in some implementations of the third aspect, the method further includes: receiving second indication information from the second device, where the second indication information indicates the comparison result.

According to a fourth aspect, a communication method is provided. The method may be performed by a first device, or may be performed by a chip or a circuit disposed in the first device. This is not limited in this application. For example, the first device may be a terminal device. For another example, the first device may be a network device.

The method includes: sending a second reference signal to a second device; receiving third indication information from the second device, where the third indication information indicates q pieces of predicted channel information, and a moment corresponding to the q pieces of predicted channel information is not earlier than a sending moment of the third indication information; sending a third reference signal to the second device; and receiving fourth indication information from the second device, where the fourth indication information indicates channel information measured based on the third reference signal, or the fourth indication information indicates the channel information measured based on the third reference signal and q' predicted channel information, and a moment corresponding to the q' predicted channel information is not earlier than a sending moment of the fourth indication information.

According to the solution in this embodiment of this application, channel information obtained by the first device may be a prediction result or a measurement result of the channel information, so that the first device can obtain, in different scenarios, channel information that can accurately reflect a channel status. For example, the channel information obtained by the first device includes a measurement result of the channel information, for example, the channel information measured based on the third reference signal, so that the first device can obtain channel information that can more accurately reflect a channel status at a measurement moment, to avoid performance deterioration that may be caused because the first device can perform data transmission based only on inaccurately predicted channel information. For another example, the channel information obtained by the first device includes a prediction result of the channel information, for example, the q pieces of predicted channel information. In this case, the first device can perform data transmission based on the predicted channel information, to alleviate a channel aging problem.

With reference to the fourth aspect, in some implementations of the fourth aspect, when the q pieces of predicted channel information are valid, the third indication information indicates the q pieces of predicted channel information; or when the q' pieces of predicted channel information are invalid, the fourth indication information indicates the channel information measured based on the third reference signal, or the fourth indication information indicates the channel information measured based on the third reference signal and the q' pieces of predicted channel information.

With reference to the fourth aspect, in some implementations of the fourth aspect, the q' pieces of channel information are invalid based on a comparison result between r pieces of predicted channel information and r pieces of measured channel information, the r pieces of predicted channel information are corresponding to the r pieces of measured channel information, r is a positive integer, and a moment corresponding to the r pieces of predicted channel information is earlier than the sending moment of the fourth indication information.

According to a fifth aspect, a communication method is provided. The method may be performed by a second device, or may be performed by a chip or a circuit disposed in the second device. This is not limited in this application. For example, the second device may be a network device.

The method includes: receiving a first reference signal from a first device; and determining, based on whether p pieces of predicted channel information are valid, to perform data transmission by using at least one of the p pieces of predicted channel information or channel information measured based on the first reference signal, where a moment corresponding to the p pieces of predicted channel information is later than a measurement moment of the first reference signal, and p is a positive integer.

For example, the first reference signal may be an uplink reference signal.

With reference to the fifth aspect, in some implementations of the fifth aspect, when the p pieces of predicted channel information are invalid, data transmission is performed based on the channel information measured based on the first reference signal; or when the p pieces of predicted channel information are valid, data transmission is performed based on the p pieces of predicted channel information.

With reference to the fifth aspect, in some implementations of the fifth aspect, the method further includes: sending first indication information to the first device, where the first indication information indicates at least one piece of channel information, and when the p pieces of predicted channel information are valid, the at least one piece of channel information includes the p pieces of predicted channel information; or when the p pieces of predicted channel information are invalid, the at least one piece of channel information includes the channel information measured based on the first reference signal and the p pieces of predicted channel information, or the at least one piece of channel information includes the channel information measured based on the first reference signal.

With reference to the fifth aspect, in some implementations of the fifth aspect, the p pieces of predicted channel information are valid or the p pieces of predicted channel information are invalid based on a comparison result between n pieces of predicted channel information and n pieces of measured channel information, the n pieces of predicted channel information are corresponding to the n pieces of measured channel information, n is a positive integer, and a moment corresponding to the n pieces of predicted channel information is earlier than the sending moment of the first indication information.

With reference to the fifth aspect, in some implementations of the fifth aspect, an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

With reference to the fifth aspect, in some implementations of the fifth aspect, the n pieces of measured channel information include the channel information measured based on the first reference signal.

With reference to the fifth aspect, in some implementations of the fifth aspect, the comparison result between the n pieces of predicted channel information and the n pieces of measured channel information includes any one of the following: a difference between the n pieces of predicted channel information and the n pieces of measured channel information, or a channel correlation between the n pieces of predicted channel information and the n pieces of measured channel information.

With reference to the fifth aspect, in some implementations of the fifth aspect, the p pieces of predicted channel information are obtained through prediction based on m pieces of measured channel information, and m is a positive integer.

With reference to the fifth aspect, in some implementations of the fifth aspect, the m pieces of measured channel information include the channel information measured based on the first reference signal.

With reference to the fifth aspect, in some implementations of the fifth aspect, the first indication information further indicates a label of the at least one piece of channel information, and the label of the at least one piece of channel information respectively indicates that the at least one piece of channel information is a prediction result or a measurement result.

With reference to the fifth aspect, in some implementations of the fifth aspect, when the at least one piece of channel information includes the p pieces of predicted channel information or the at least one piece of channel information includes the channel information measured based on the first reference signal and the p pieces of predicted channel information, the first indication information further indicates the moment corresponding to the p pieces of predicted channel information.

It should be understood that extensions to, limitations on, explanations for, and description of corresponding content in the first aspect are also applicable to same content in the second aspect, the third aspect, the fourth aspect, and the fifth aspect.

According to a sixth aspect, a communication apparatus is provided. The communication apparatus may be a second device, or may be an apparatus, a module, a circuit, a chip, or the like that is configured and disposed in the second device, or may be an apparatus that can be used in cooperation with the second device. The second device may be a terminal device or a network device. In a design, the communication apparatus may include modules that are in one-to-one correspondence with the methods/operations/steps/actions described in the first aspect or the fifth aspect. The module may be implemented by a hardware circuit, software, or a combination of the hardware circuit and the software. In a design, the communication apparatus may include a processing module, a receiving module, and a sending module. In a design, the communication apparatus may include a processing module and a receiving module. Further, the communication apparatus may further include a sending module.

The receiving module is configured to perform a receiving action in the method described in the first aspect, the sending module is configured to perform a sending action in the method described in the first aspect, and the processing module is configured to perform a processing action in the method described in the first aspect, for example, determine whether p pieces of predicted channel information are valid. Alternatively, the receiving module is configured to perform a receiving action in the method described in the fifth aspect, the sending module is configured to perform a sending action in the method described in the fifth aspect, and the processing module is configured to perform a processing action in the method described in the fifth aspect, for example, determining, based on whether p pieces of predicted channel information are valid, to perform data transmission by using at least one of the p pieces of predicted channel information or channel information measured based on the first reference signal.

According to a seventh aspect, a communication apparatus is provided. The communication apparatus may be a first device, or may be an apparatus, a module, a circuit, a chip, or the like that is configured and disposed in the first device, or may be an apparatus that can be used in cooperation with the first device. The first device may be a network device or a terminal device. In a design, the communication apparatus may include modules that are in one-to-one correspondence with the methods/operations/steps/actions described in the second aspect, the third aspect, or the fourth aspect. The module may be implemented by a hardware circuit, software, or a combination of the hardware circuit and the software. In a design, the communication apparatus may include a sending module and a receiving module. Further, the communication apparatus may further include a processing module.

The receiving module is configured to perform a receiving action in the method described in the second aspect, the sending module is configured to perform a sending action in the method described in the second aspect, and the processing module is configured to perform a processing action in the method described in the second aspect. Alternatively, the receiving module is configured to perform a receiving action in the method described in the third aspect, the sending module is configured to perform a sending action in the method described in the third aspect, and the processing module is configured to perform a processing action in the method described in the third aspect. Alternatively, the receiving module is configured to perform a receiving action in the method described in the fourth aspect, the sending module is configured to perform a sending action in the method described in the fourth aspect, and the processing module is configured to perform a processing action in the method described in the fourth aspect.

According to an eighth aspect, a communication apparatus is provided, including a processor and a storage medium. The storage medium stores instructions. When the instructions are run by the processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, or the method according to any one of the fifth aspect or the possible implementations of the fifth aspect is implemented.

According to a ninth aspect, a communication apparatus is provided, including a processor. The processor is configured to process data and/or information, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, or the method according to any one of the fifth aspect or the possible implementations of the fifth aspect is implemented. Optionally, the communication apparatus may further include a communication interface. The communication interface is configured to receive data and/or information, and transmit the received data and/or information to the processor. Optionally, the communication interface is further configured to output data and/or information processed by the processor.

According to a tenth aspect, a chip is provided, including a processor. The processor is configured to run a program or instructions, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, or the method according to any one of the fifth aspect or the possible implementations of the fifth aspect is implemented. Optionally, the chip may further include a memory, and the memory is configured to store the program or the instructions. Optionally, the chip may further include a transceiver.

According to an eleventh aspect, a computer-readable storage medium is provided. The computer-readable storage medium includes instructions. When the instructions are run by a processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, or the method according to any one of the fifth aspect or the possible implementations of the fifth aspect is implemented.

According to a twelfth aspect, a computer program product is provided. The computer program product includes computer program code or instructions. When the computer program code or the instructions are run, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, or the method according to any one of the fifth aspect or the possible implementations of the fifth aspect is implemented.

According to a thirteenth aspect, a communication system is provided, including a combination of one or more of the following apparatuses: an apparatus for performing the communication method according to any one of the first aspect or the possible implementations of the first aspect, an apparatus for performing the communication method according to any one of the second aspect or the possible implementations of the second aspect, an apparatus for performing the communication method according to any one of the third aspect or the possible implementations of the third aspect, an apparatus for performing the communication method according to any one of the fourth aspect or the possible implementations of the fourth aspect, or an apparatus for performing the communication method according to any one of the fifth aspect or the possible implementations of the fifth aspect.

## BRIEF DESCRIPTION OF DRAWINGS

FIG. 1 is a diagram of a communication system to which an embodiment of this application is applicable;
FIG. 2 is a diagram of another communication system to which an embodiment of this application is applicable;
FIG. 3 is a schematic block diagram of an auto-coder;
FIG. 4 is a diagram of an AI application framework;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a diagram of a CSI feedback procedure according to an embodiment of this application;
FIG. 9 is a diagram of another CSI feedback procedure according to an embodiment of this application;

FIG. 10 is a diagram of still another CSI feedback procedure according to an embodiment of this application;

FIG. 11 is a diagram of still another CSI feedback procedure according to an embodiment of this application;

FIG. 12 is a schematic block diagram of a communication apparatus according to an embodiment of this application; and

FIG. 13 is a schematic block diagram of another communication apparatus according to an embodiment of this application.

## DESCRIPTION OF EMBODIMENTS

The following describes technical solutions of this application with reference to accompanying drawings.

The technical solutions provided in this application may be used in various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of multiple systems. The technical solutions provided in this application may be further used in device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. It may be understood that the terminal device in this disclosure may be replaced with a first network element, the network device may be replaced with a second network element, and the terminal device and the network device perform a corresponding communication method in this disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device having a wireless communication function or another processing device having a wireless communication function and connected to a wireless modem, a wearable device having a wireless communication function, a terminal device in a 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices like smartphones, for example, various smart bands or smart jewelry for monitoring physical signs.

In embodiments of this application, an apparatus configured to implement a function of the terminal device may be a terminal device, or may be an apparatus that can support the terminal device in implementing the function, for example, a chip system, where the apparatus may be mounted in the terminal device or used in cooperation with the terminal device. In embodiments of this application, the chip system may include a chip, or may include the chip and another discrete component. In embodiments of this application, that the apparatus for implementing the function of the terminal device is a terminal device is only used as an example for description, but does not constitute a limitation on solutions in embodiments of this application.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission reception point (transmitting and receiving point, TRP), a transmitting point (transmitting point, TP), a master station, a secondary station, a multi-standard radio (MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be stationary or mobile. For example, a helicopter or an uncrewed aerial vehicle may be configured as a movable base station, and one or more cells may move based on a position of the movable base station. In other examples, a helicopter or an uncrewed aerial vehicle may be configured as a device for communicating with another base station.

In some deployments, the network device mentioned in embodiments of this application may be a device including a CU, or a device including a DU, or a device including the CU and the DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus for implementing a function of the network device may be a network device, or may be an apparatus that can support the network device in implementing the function, for example, a chip system, a hardware circuit, a software module, or a combination of the hardware circuit and the software module. The apparatus may be mounted in the network device or used in cooperation with the network device. In embodiments of this application, that the apparatus for implementing the function of the network device is a network device is only used as an example for description, but does not constitute a limitation on solutions in embodiments of this application.

The network device and the terminal device may be deployed on land, including an indoor or outdoor device, a handheld device, or a vehicle-mounted device; may be deployed on water; or may be deployed on an airplane, a balloon, and a satellite in the air. Scenarios in which the network device and the terminal device are located are not limited in embodiment of this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. In addition, because the network has increasingly powerful functions, for example, supporting an increasingly high spectrum and supporting new technologies such as a higher-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in the wireless network, a dedicated AI network element or AI module may be further introduced into the network. If the AI network element is introduced, the AI network element is corresponding to an independent network element. If the AI module is introduced, the AI module may be located in a specific network element, and the corresponding network element may be a terminal device, a network device, or the like.

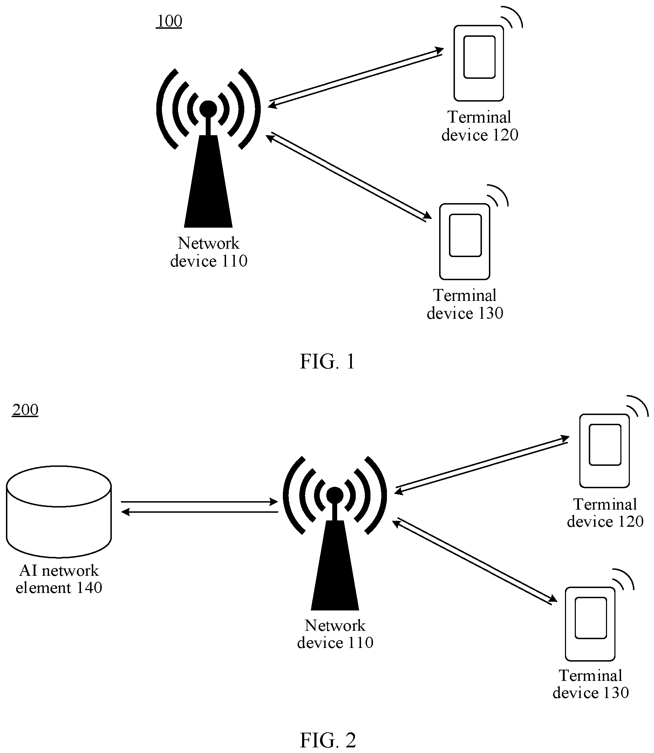

FIG. 1 is a diagram of a communication system to which a communication method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

FIG. 2 is a diagram of another communication system to which a communication method according to an embodiment of this application is applicable. Compared with the communication system 100 shown in FIG. 1, the communication system 200 shown in FIG. 2 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs a training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 2, that the AI network element 140 is directly connected to the network device 110 is only used an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed in a network device and/or a terminal device as a module, for example, disposed in the network device 110 or the terminal device shown in FIG. 1.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server of an over the top (OTT, over the top) system. The AI node may communicate with another device in the communication system. The another device may be, for example, one or more of the following: a network device, a terminal device, a network element of a core network, or the like.

It may be understood that a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, or may be integrated into a same device to implement the different functions, or may be network elements in a hardware device, or may be software functions running on dedicated hardware, or may be virtualization functions instantiated on a platform (for example, a cloud platform). Specific forms of the AI nodes are not limited in this application.

It should be noted that FIG. 1 and FIG. 2 are merely simplified diagrams of examples for ease of understanding. For example, the communication system may further include another device, for example, may further include a wireless relay device and/or a wireless backhaul device, which are/is not shown in FIG. 1 and FIG. 2. During actual application, the communication system may include a plurality of network devices, and may also include a plurality of terminal devices. Quantities of network devices and terminal devices included in the communication system are not limited in embodiments of this application.

For ease of understanding solutions in embodiments of this application, the following describes terms that may be used in embodiments of this application.

(1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

**(2) Two-end model:**

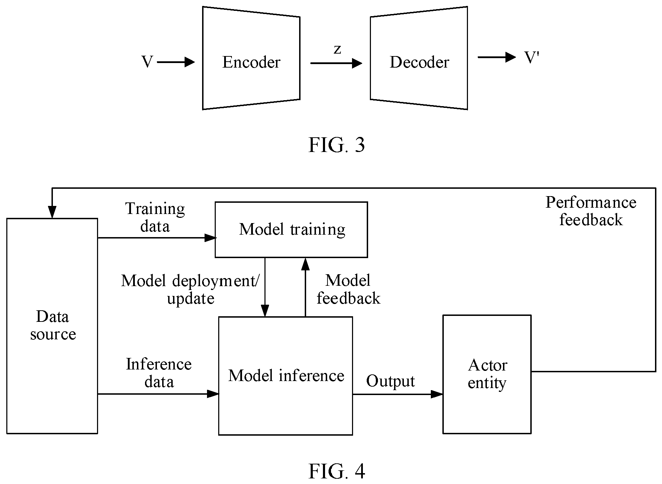

The two-end model may also be referred to as a dual-side model, a cooperative model, a dual model, a two-side (two-side) model, or the like. The two-side model is a model including a plurality of submodels. The plurality of submodels included in the model need to match each other. The plurality of submodels may be deployed on different nodes. An auto-encoder (auto-encoder, AE) model includes an encoder (encoder) and a decoder (decoder), as shown in FIG. 3. An AE model in which an encoder and a decoder are separately deployed on different nodes is a typical bilateral model. The encoder and the decoder of the AE model are usually jointly trained and used in cooperation. It may be understood that the encoder and decoder are AI models that match each other. The encoder processes an input V to obtain a processed result z, and the decoder can decode the output z of the encoder to an expected output V'. One encoder may include one or more submodels, and a decoder matching the encoder also includes one or more submodels. An encoder and a decoder that are used in cooperation include same quantities of submodels, and the submodels included in the encoder are in one-to-one correspondence with the submodels included in the decoder. The submodel may be an AI model.

The auto-encoder is an unsupervised learning neural network, and is characterized by using input data as label data. Therefore, the auto-encoder may also be understood as a self-supervised learning neural network. The auto-encoder may be configured to compress and restore data. For example, the encoder in the auto-encoder may compress (encode) data A to obtain data B, and the decoder in the auto-encoder may decompress (decode) the data B to restore the data A. Alternatively, this may be understood as that the decoder performs an inverse operation of an operation performed by the encoder.

For example, an AI prediction model in embodiments of this application may include an encoder and a decoder. The encoder and the decoder are used in cooperation. It may be understood that the encoder and the decoder are AI models that match each other. The encoder and the decoder may be separately deployed on the terminal device and the network device.

Alternatively, the AI prediction model in embodiments of this application may be a single-side model, and the AI prediction model may be deployed on the terminal device or the network device.

**(3) Neural network (neural network, NN):**

The neural network is a specific implementation form of AI or machine learning. According to the universal approximation theorem, the neural network can approximate any continuous function in theory, so that the neural network has a capability of learning any mapping.

The neural network may include a neuron. The neuron may be an operation unit that uses $x_s$ and an intercept of 1 as inputs. An output of the operation unit may be as follows:

$$h_{W,b}(x) = f(W^T x) = f(\sum_{s=1}^{n} W_s x_s + b),$$

where s=1, 2, ..., or n, n is a natural number greater than 1, $W_s$ is a weight of $x_s$, b is a bias of the neuron, and f is an activation function (activation function) of the neuron, and is used to perform nonlinear transformation on a feature obtained from the neural network, to introduce a nonlinear feature into the neural network, and convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

For example, the type of the AI model is a neural network. The AI model in this disclosure may be a deep neural network (deep neural network, DNN). Based on a network construction mode, the DNN may include a feedforward neural network (feedforward neural network, FNN), a convolutional neural network (convolutional neural network, CNN), a recurrent neural network (recurrent neural network, RNN), and the like.

**(4) Training dataset and inference data:**

The training dataset is used to train an AI model. The training dataset may include an input of the AI model, or include the input of the AI model and a target output of the AI model. The training dataset includes one or more pieces of training data. The training data may include a training sample input to the AI model, or may include the target output of the AI model. The target output may also be referred to as a label or a label sample.

In the communication field, the training dataset may include simulation data collected by using a simulation platform, or may include experimental data collected in an experiment scenario, or may include actual measurement data collected in an actual communication network. Because geographical environments and channel conditions in which data is generated are different, for example, indoor, outdoor, moving speeds, frequency bands, antenna configurations, or the like are different, collected data may be classified when the data is obtained. For example, data with a same channel propagation environment and a same antenna configuration is classified into one type.

Model training is essentially learning some features of training data from the training data. In a process of training an AI model (for example, a neural network model), because an output of the AI model is expected to be as close as possible to a predicted value that is actually desired, a predicted value of a current network may be compared with a target value that is actually desired, and a weight vector of each layer of the AI model is updated based on a difference between the predicted value and the target value (certainly, before a 1st update, an initialization process is usually performed, to be specific, parameters are preconfigured for all layers of the AI model). For example, if the predicted value of the network is large, the weight vector is adjusted to decrease the predicted value, and adjustment is continuously performed until the AI model can predict the target value that is actually desired or a value that is quite close to the target value that is actually desired. Therefore, "how to obtain, through comparison, a difference between the predicted value and the target value" needs to be predefined. This is a loss function (loss function) or an objective function (objective function). The loss function and the objective function are important equations used to measure the difference between the predicted value and the target value. The loss function is used as an example. A larger output value (loss) of the loss function indicates a greater difference. In this case, the training for the AI model is a process of minimizing the loss, to make a value of the loss function less than a threshold, or make a value of the loss function satisfy a target requirement. For example, the AI model is a neural network, and adjusting a model parameter of the neural network includes adjusting at least one of the following parameters: a quantity of layers and a width of the neural network, a weight of a neuron, or a parameter in an activation function of the neuron.

The inference data may be used as an input of a trained AI model and used for inference by the AI model. During model inference, the inference data is input into the AI model, to obtain a corresponding output, namely, an inference result.

(5) AI model design:

The AI model design mainly includes a data collection phase (for example, collection of training data and/or inference data), a model training phase, and a model inference phase, and may further include an inference result application phase.

FIG. 4 shows an AI application framework.

In the data collection phase, a data source (data source) is used to provide a training dataset and inference data. In the model training phase, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input to the AI model, to obtain an output through the AI model, and the output is the inference result. The inference result may indicate a configuration parameter used (executed) by an actor object, and/or an operation performed by the actor object. The inference result is published in the inference result application phase. For example, the inference result may be planned by an actor (actor) entity in a unified manner. For example, the actor entity may send the inference result to one or more actor objects (for example, a network device or a terminal device) for execution. For another example, the actor entity may further feed back performance of the model to the data source, to facilitate subsequent model update training.

It may be understood that a communication system may include a network element having an artificial intelligence function. The foregoing phases related to the AI model design may be performed by one or more network elements having the artificial intelligence function. In a possible design, the AI function (for example, an AI module or an AI entity) may be configured in an existing network element in the communication system, to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to the network device via a third-party network element. The third-party network element may be a core network element like an authentication management function (authentication management function, AMF) network element or a user plane function (user plane function, UPF) network element, an operation, maintenance, and management (operation, administration, and maintenance, OAM) network element, a cloud server, or another network element. This is not limited. For example, the independent network element may be deployed on one or more of a network device side, a terminal device side, or a core network side. Optionally, the independent network element may be deployed on a cloud-side server. For example, the AI network element 140 is introduced into the communication system shown in FIG. 2.

Training processes for different models may be deployed on different devices or nodes, or may be deployed on a same device or node. Inference processes for different models may be deployed on different devices or nodes, or may be deployed on a same device or node.

For example, a model training phase is performed by a terminal device. After training an encoder and a decoder that match each other, the terminal device may send a model parameter of the decoder to a network device. For example, a model training phase is performed by a network device. After training an encoder and a decoder that match each other, the network device may indicate a model parameter of the encoder to a terminal device. For example, a model training phase is performed by an independent AI network element. After training an encoder and a decoder that match each other, the AI network element may send a model parameter of the encoder to a terminal device, and send a model parameter of the decoder to a network device. Then, a model inference phase corresponding to the encoder is performed in the terminal device, and a model inference phase corresponding to the decoder is performed in the network device.

The model parameter may include one or more of the following: a structure parameter of the model (for example, a quantity of layers and/or a weight of the model), an input parameter of the model (for example, an input dimension and a quantity of input ports), or an output parameter of the model (for example, an output dimension and a quantity of output ports). It may be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

The following further describes examples of a training process and an inference process for an AI prediction model in embodiments of this application.

A training dataset used for training the AI prediction model includes a training sample and a sample label. For example, the training sample is channel information measured at one or more moments, and the sample label is channel information measured at a moment after the one or more moments.

A specific training process is as follows: The model training node processes, by using the AI prediction model, the channel information measured at the one or more moments, that is, the training sample, and predicts channel information at the moment after the one or more moments, that is, predicted channel information. Then, a difference between the predicted channel information and the corresponding sample label, that is, a value of a loss function, is calculated, and a parameter of the AI prediction model is updated based on the value of the loss function, so that the difference between the predicted channel information and the corresponding sample label is minimized, that is, the loss function is minimized. For example, the loss function may be a smallest mean square error (mean square error, MSE) or a cosine similarity. Repeat the foregoing operations to obtain an AI prediction model that satisfies a target requirement. The model training node may be a terminal device, a network device, or another network element having an AI function in a communication system.

(6) Channel state information (channel state information, CSI):

In a communication system (for example, an LTE communication system or an NR communication system), a network device needs to determine, based on the CSI, configurations such as a resource, an MCS, and precoding that are used to schedule a downlink data channel for a terminal device. It may be understood that the CSI is channel information, and is information that can reflect a channel feature and channel quality. The channel information may also be referred to as a channel response. For example, the CSI may be represented by using a channel matrix. For example, the CSI includes the channel matrix, or the CSI may include a channel eigenvector.

CSI measurement means that a receive end resolves channel information based on a reference signal sent by a transmit end, that is, estimates the channel information by using a channel estimation method. A propagation form of a radio signal in a channel may be represented as $Y=HX+N$, where H is the CSI, X is the reference signal, N is noise, and Y is a received signal. The reference signal X is known information specified by the terminal device and the network device. After the received signal Y is obtained, channel estimation may be performed by using a channel estimation algorithm, for example, a least square method or a smallest mean square error method. For example, the reference signal X may include one or more of a channel state information reference signal (channel state information reference signal, CSI-RS), a synchronization signal/broadcast channel block (synchronization signal/physical broadcast channel block, SSB), a sounding reference signal (sounding reference signal, SRS), a demodulation reference signal (demodulation reference signal, DMRS), or the like. The CSI-RS, the SSB, the DMRS, and the like may be used to measure downlink CSI. The SRS, the DMRS, and the like may be used to measure uplink CSI.

An FDD communication scenario is used as an example. In the FDD communication scenario, because uplink and downlink channels do not have reciprocity or the reciprocity between the uplink and downlink channels cannot be ensured, the network device usually sends a downlink reference signal to the terminal device. The terminal device performs channel measurement and interference measurement based on a received downlink reference signal, to estimate downlink channel information. The downlink channel information includes CSI. Then, the CSI is fed back to the network device, so that the network device obtains downlink CSI.

For example, the CSI may include at least one of the following: a channel quality indicator (channel quality indication, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), a reference signal received power (reference signal receiving power, RSRP), a signal to interference plus noise ratio (signal to interference plus noise ratio, SINR), or the like. The signal to interference plus noise ratio may also be referred to as a signal-to-interference-plus-noise ratio.

For example, the terminal device may use an AI-based CSI feedback manner, to be specific, perform feedback by using an AI compression model. Specifically, the terminal device compresses and feeds back CSI by using an AI model, and the network device restores compressed CSI by using an AI model. A sequence (for example, a bit sequence) is transmitted in AI-based CSI feedback, and overheads are lower than overheads of a conventional CSI report feedback. As described above, the AI prediction model may be a two-side model. The AI prediction model and the AI compression model may be a same model. To be specific, an encoder may be configured to: predict CSI at a future moment, and compress the predicted CSI at the future moment. In other words, an output of the encoder is compressed information of the predicted CSI. The decoder may be configured to decode and restore the compressed information of the predicted CSI, to obtain the predicted CSI. Alternatively, the AI prediction model and the AI compression model may be different models.

Unless a moving speed of the terminal device is very low, due to a fast channel change caused by multipath fading, obtained CSI becomes outdated due to fast fading. Fading CSI has a serious negative impact on various adaptive transmission systems.

CSI prediction helps alleviate a channel aging problem. The CSI prediction means that future CSI is predicted by using correlations of a channel in time domain, frequency domain, and space domain and with reference to historical CSI. The CSI prediction may be implemented in a plurality of manners, for example, linear fitting-based CSI prediction or filtering-based CSI prediction. An AI-based CSI prediction method is generated by introducing an AI technology into a wireless communication network. Compared with another manner, an AI-based CSI prediction result usually has higher prediction precision, and a small amount of historical CSI is needed. AI-based CSI prediction means that an AI prediction model is obtained through training, so that when current CSI and/or historical CSI are/is input into the AI prediction model, needed future CSI can be output.

However, in an actual scenario, a CSI prediction result may not accurately reflect actual channel quality, affecting accuracy of subsequent related configuration of the network device.

For example, when the terminal device feeds back CSI, if an AI prediction model is deployed on the terminal device, the terminal device may feed back, to the network device, future CSI predicted by the AI prediction model. When a distribution difference between training data of the AI prediction model and current data of the AI prediction model is large, performance of the AI prediction model is affected, and accuracy of the predicted CSI is further affected. When the accuracy of the predicted CSI is low, the CSI prediction cannot bring a performance gain, and further affects the accuracy of the subsequent related configuration of the network device, resulting in performance deterioration.

In view of this, this application provides a communication method and a communication apparatus, to determine channel information based on accuracy of a prediction result of channel information, so that channel information obtained by a related device can accurately reflect a channel status. The communication method may be applied to the foregoing communication system, for example, the FDD communication scenario. In addition, optionally, the communication method may be further applied to a TDD communication scenario. This is not limited in this disclosure.

It should be understood that, in this application, the indication includes a direct indication (which is also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that information C is used to determine information D may further include an indirect determining case. For example, the information D is determined based on information E, and the information E is determined based on the information C.

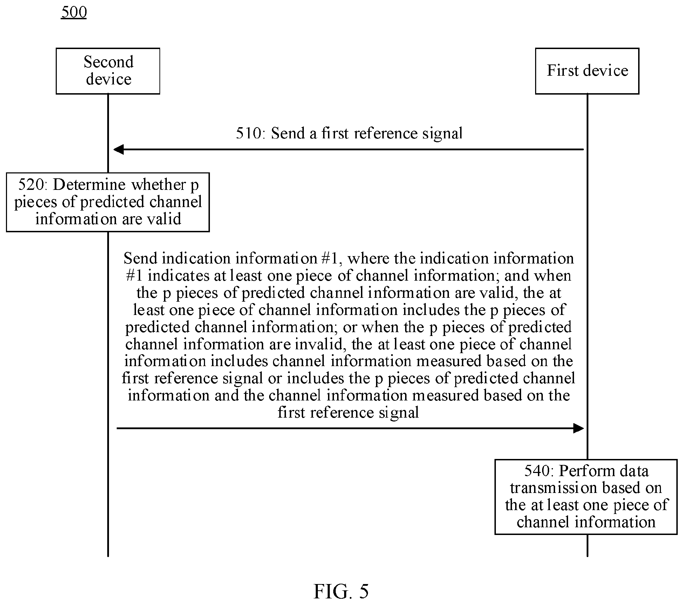

FIG. 5 is a schematic flowchart of a communication method according to this application. As shown in FIG. 5, the method 500 may include the following steps.

510: A first device sends a first reference signal to a second device.

In a possible implementation, the second device may be a terminal device, and the first device may be a network device. In this case, the first reference signal may be a downlink reference signal, and channel information may be downlink channel information. For example, the first reference signal may be one or more of a CSI-RS, an SSB, a DMRS, or the like.

In another possible implementation, the second device may be a network device, and the first device may be a terminal device. In this case, the first reference signal may be an uplink reference signal, and channel information may be uplink channel information. For example, the first reference signal may be one or more of an SRS, a DMRS, or the like.

520: Determine whether p pieces of predicted channel information are valid.

530: The second device sends indication information #1 (an example of first indication information) to the first device. The indication information #1 indicates at least one piece of channel information. When the p pieces of predicted channel information are valid, the at least one piece of channel information includes the p pieces of predicted channel information. Alternatively, when the p pieces of predicted channel information are invalid, the at least one piece of channel information includes channel information measured based on the first reference signal. Alternatively, when the p pieces of predicted channel information are invalid, the at least one piece of channel information includes the p pieces of predicted channel information and channel information measured based on the first reference signal. p is a positive integer. A moment corresponding to the p pieces of predicted channel information is not earlier than a sending moment of the indication information #1.

In step 530, the second device may determine, based on whether the p pieces of predicted channel information are valid, content fed back to the first device. For example, the p pieces of predicted channel information are fed back. For another example, the channel information measured based on the first reference signal is fed back. For another example, the channel information measured based on the first reference signal and the p pieces of predicted channel information are fed back.

The content of the feedback may be explicitly or implicitly indicated by the indication information #1.

The channel information is used to reflect a channel status. For example, the channel information may be CSI. For example, the CSI may include one or more of a CQI, a PMI, an RI, a CRI, a LI, an RSRP, an SINR, or the like.

For example, the predicted channel information may be predicted CSI. The measured channel information may be measured CSI.

The measured channel information is channel information obtained through measurement based on a reference signal. The measured channel information may also be referred to as a measurement result of the channel information.

The predicted channel information is information obtained through prediction. Specifically, channel information at one or more future moments is predicted by using channel information measured at one or more historical moments. It should be understood that the "historical moment" and the "future moment" herein are relative concepts, provided that the future moment is later than the historical moment, that is, provided that a measurement moment of measured channel information used for prediction is earlier than a moment at which prediction needs to be performed. The predicted channel information may also be referred to as a prediction result of the channel information.

The channel information may be predicted in a plurality of manners. For example, the channel information may be predicted in one or more of the following manners: linear fitting, Kalman filtering, an AI model, or the like. An AI model-based prediction manner is used as an example. Channel information measured at one or more historical moments is input into an AI prediction model, and the AI prediction model outputs channel information at one or more future moments.

It should be understood that the foregoing is merely an example, and constitute no limitation on the solution in this embodiment of this application. The channel information may be predicted in another manner. This is not limited in this embodiment of this application.

The p pieces of predicted channel information may be understood as predicted channel information at p moments. The p moments are moments corresponding to the p pieces of predicted channel information. A first moment may also be referred to as a feedback moment. The p moments are not earlier than the feedback moment.

For example, predicted channel information #1 may be obtained by predicting channel information at a moment T. To be specific, the predicted channel information #1 is predicted channel information at the moment T, and a moment corresponding to the predicted channel information #1 is the moment T.

In a possible implementation, determining whether the p pieces of predicted channel information are valid may be determining accuracy of channel information prediction. If the channel information prediction is accurate, the p pieces of predicted channel information are valid. If the channel information prediction is inaccurate, the p pieces of predicted channel information are invalid.

Optionally, step 520 includes: Determine, based on a comparison result between n pieces of predicted channel information and n pieces of measured channel information, whether the p pieces of predicted channel information are valid. The n pieces of predicted channel information are corresponding to the n pieces of measured channel information. n is a positive integer. A moment corresponding to the n pieces of predicted channel information is earlier than the sending moment of the indication information #1.

In other words, in step 530, the second device may determine, based on the comparison result, the content fed back to the first device. For example, the p pieces of predicted channel information are fed back. For another example, the channel information measured based on the first reference signal is fed back. For another example, the channel information measured based on the first reference signal and the p pieces of predicted channel information are fed back.

The n pieces of predicted channel information may be understood as predicted channel information at n moments.

The n pieces of measured channel information may be understood as channel information measured at n moments, or channel information obtained through measurement at the n moments. A moment corresponding to measured channel information may be a measurement moment of the channel information.

The comparison result between the n pieces of predicted channel information and the n pieces of measured channel information may be used to reflect prediction accuracy. The second device may determine, based on the prediction accuracy, the content fed back to the first device.

For ease of description, only the AI prediction model is used as an example for description in this embodiment of this application.

For example, the AI prediction model may be a single-side model. For example, the single-side model may be deployed on the second device. In this case, the terminal device may obtain the n pieces of predicted channel information by using the AI prediction model. The n pieces of predicted channel information may be stored in the second device.

Alternatively, the AI prediction model may be a two-side model. For example, submodels in the two-side model may be separately deployed on the second device and the first device. In a possible implementation, the indication information #1 sent by the second device to the first device may indicate the p pieces of predicted channel information in the following manner. The indication information #1 may directly indicate an output result of the submodel deployed on the second device. The submodel deployed on the first device may be used to process the output result, to obtain the p pieces of predicted channel information. For example, the n pieces of predicted channel information may be received from the first device. Alternatively, a model that is the same as the submodel deployed on the first device may be deployed on the second device. Alternatively, the n pieces of predicted channel information may be obtained in another manner. This is not limited in this embodiment of this application.

For example, the AI prediction model may be a neural network model, for example, an RNN, a long short-term memory (long short-term memory, LSTM) network, or a transformer (transformer) model.

It should be understood that the foregoing is merely an example, and the AI prediction model may alternatively use a model of another structure. This is not limited in this embodiment of this application.

The n pieces of predicted channel information and the p pieces of predicted channel information may be obtained through prediction based on a same AI prediction model.

In this case, the comparison result between the n pieces of predicted channel information and the n pieces of measured channel information may be used to reflect performance of the AI prediction model. The comparison result may be used as a monitoring result of the AI prediction model.

The first moment is a feedback moment. The p pieces of channel information are channel information predicted after the feedback moment.

540: The first device performs data transmission based on the at least one piece of channel information.

In the solution of this embodiment of this application, the content fed back to the first device, that is, content indicated by the first indication information, is determined based on whether the p pieces of predicted channel information are valid, to expect that channel information obtained by the first device can accurately reflect a channel status. For example, when the p pieces of predicted channel information are invalid, the channel information fed back to the first device includes at least the channel information measured based on the first reference signal. In this way, the first device can obtain channel information that can more accurately reflect the channel status, to avoid performance deterioration that may be caused when the first device performs data transmission based on inaccurately predicted channel information. For another example, when the p pieces of predicted channel information are valid, the p pieces of predicted channel information may be fed back to the first device, so that the first device can perform data transmission based on the predicted channel information, to alleviate a channel aging problem. In addition, when the p pieces of predicted channel information are invalid, a part of the p pieces of predicted channel information may be accurate. The second device may feed back, to the first device, the channel information measured based on the first reference signal and the p pieces of predicted channel information, so that the first device can perform subsequent processing based on the p pieces of predicted channel information. For example, the first device may send a reference signal based on time corresponding to the p pieces of predicted channel information, to continue performing the method in this embodiment of this application. It should be understood that the foregoing is merely an example, and constitute no limitation on the solution in this embodiment of this application. For example, a sending moment of the reference signal, the moment corresponding to the p pieces of predicted channel information, the sending moment of the indication information #1, and the like may alternatively be preset.

In addition, the comparison result between the n pieces of predicted channel information and the n pieces of measured channel information may be used to reflect the accuracy of the channel information prediction. In this way, whether the p pieces of predicted channel information are valid can be determined based on the accuracy of the channel information prediction, and the content indicated by the first indication information can be further determined, to expect that the channel information obtained by the first device can accurately reflect the channel status. For example, if the channel information prediction is accurate, it may be determined that the p pieces of predicted channel information are valid. For another example, if the channel information prediction is inaccurate, it may be determined that the p pieces of predicted channel information are invalid.

When n>1, the n pieces of predicted channel information may be obtained through one time of prediction, or may be obtained through multiple times of prediction.

That the n pieces of predicted channel information are obtained through one time of prediction may be understood as that the n pieces of predicted channel information are obtained through prediction based on same measured channel information. The AI prediction model is used as an example. The n pieces of predicted channel information may be obtained based on a same model input. For example, one or more pieces of measured channel information are input into the AI prediction model for processing, and a measurement moment of the one or more pieces of measured channel information is earlier than a moment T'. The AI prediction model may predict channel information at n' moments after T', and output n' predicted channel information. The n pieces of predicted channel information may be a part or all of the n' pieces of predicted channel information. n' is an integer greater than 1.

That the n pieces of predicted channel information are obtained through multiple times of prediction may be understood as that the n pieces of predicted channel information are obtained through prediction based on different measured channel information. The AI prediction model is used as an example. The n pieces of predicted channel information may be obtained based on different model inputs.

As described above, there is a correspondence between the n pieces of predicted channel information and the n pieces of measured channel information.

For example, the correspondence may be predefined. Alternatively, the correspondence may be indicated by the first device.

For example, n may be 1, the n pieces of predicted channel information may be fed back at a moment T", and the first device may deliver a reference signal and indicate the moment T". The second device obtains channel information through measurement based on the reference signal. There is a correspondence between predicted channel information fed back at the moment T" and the channel information obtained through measurement based on the reference signal. The second device may use the channel information obtained through measurement based on the reference signal as the n pieces of measured channel information, and use the predicted channel information fed back at the moment T" as the n pieces of predicted channel information.

For another example, the first device may deliver a reference signal. The second device obtains channel information through measurement based on the reference signal. There is a correspondence between predicted channel information fed back by the second device last time and the channel information obtained through measurement based on the reference signal. The second device may use the channel information obtained through measurement based on the reference signal as the n pieces of measured channel information, and use the predicted channel information fed back last time as the n pieces of predicted channel information.

Optionally, an $i^{th}$ piece of predicted channel information in the n pieces of predicted channel information is corresponding to an $i^{th}$ piece of measured channel information in the n pieces of measured channel information. A difference between a moment corresponding to the $i^{th}$ piece of predicted channel information and a moment corresponding to the $i^{th}$ piece of measured channel information is less than or equal to a first threshold, where i=1, 2, ..., n.

In other words, for a group of predicted channel information and measured channel information that have a correspondence, a difference between a moment corresponding to the predicted channel information and a moment corresponding to the measured channel information is less than or equal to the first threshold.

For example, the first threshold may be predefined, or may be indicated by the first device, or may be determined by the second device.

For example, the first threshold is less than or equal to coherence time.

In this case, moments corresponding to the n pieces of predicted channel information are close to moments corresponding to the n pieces of measured channel information. The comparison result obtained in this case can more accurately reflect the accuracy of the channel information prediction. This helps avoid interference caused by a time factor.

For example, the n pieces of measured channel information may not include channel information measured based on the first reference signal.

Optionally, the n pieces of measured channel information may include the channel information measured based on the first reference signal.

For channel information used for comparison, a moment closer to the moment corresponding to the p pieces of predicted channel information indicates that a comparison result of the channel information used for comparison can better reflect accuracy of a prediction result near the moment corresponding to the p pieces of predicted channel information. The moment corresponding to the p pieces of predicted channel information is not earlier than the sending moment of the first indication information. The first reference signal may be a reference signal at a moment closest to the sending moment of the first indication information, and the channel information measured based on the first reference signal can more accurately reflect the channel status at the sending moment of the first indication information. In the solution of this embodiment of this application, the n pieces of measured channel information include the channel information measured based on the first reference signal. This helps determine the accuracy of the channel information prediction near the moment corresponding to the p pieces of predicted channel information, and helps more accurately determine whether the p pieces of predicted channel information are valid, to help ensure that the first device obtains more accurate channel information.

The p pieces of predicted channel information may be obtained through prediction based on m pieces of measured channel information. m is a positive integer.

For example, the m pieces of measured channel information are input into the AI prediction model for processing. The AI prediction model may predict channel information at p' moments after the first moment, and output p' pieces of predicted channel information. The p pieces of predicted channel information may be all or a part of the p' pieces of predicted channel information. In other words, the p pieces of channel information may be all or a part of the predicted channel information output by the AI prediction model.

The m pieces of measured channel information may be completely or partially the same as the n pieces of measured channel information. Alternatively, the m pieces of measured channel information may be completely different from the n pieces of measured channel information. This is not limited in this embodiment of this application.

Further, the m pieces of measured channel information may include the channel information measured based on the first reference signal.

For measured channel information used to predict channel information at a future moment, a moment closer to a moment at which prediction needs to be performed usually indicates higher accuracy of predicted channel information. The moment corresponding to the p pieces of predicted channel information is not earlier than the sending moment of the first indication information. In the solution of this embodiment of this application, the first reference signal may be a reference signal at a moment closest to the sending moment of the first indication information, and a moment corresponding to the channel information measured based on the first reference signal is closer to the moment corresponding to the p pieces of predicted channel information. The n pieces of measured channel information include the channel information measured based on the first reference signal, that is, the channel information measured based on the first reference signal is used to determine the p pieces of predicted channel information, so that the p pieces of predicted channel information are more accurate.

Optionally, the comparison result between the n pieces of predicted channel information and the n pieces of measured channel information may include at least one of the following:

a difference between the n pieces of predicted channel information and the n pieces of measured channel information, or a channel correlation between the n pieces of predicted channel information and the n pieces of measured channel information.

The difference may be used as a prediction error, and is used to reflect accuracy of the prediction result of the channel information.

The difference between the predicted channel information and the measured channel information may include one or more differences, and the one or more differences may be represented by one or more difference indicators.

For example, the difference indicator may include an MSE, a normalized mean square error (normalized mean square error, NMSE), or the like.

The channel correlation may be used to reflect accuracy of the prediction result of the channel information.

The channel correlation between the predicted channel information and the measured channel information may include one or more channel correlations, and the one or more channel correlations may be represented by one or more channel correlation indicators.

For example, the channel correlation indicator may include a generalized cosine similarity (generalized cosine similarity, GCS), a squared generalized cosine similarity (squared generalized cosine similarity, SGCS), or the like.

The comparison result between the n pieces of predicted channel information and the n pieces of measured channel information may also be referred to as a comparison result between n groups of predicted channel information and measured channel information. In each group, the predicted channel information is corresponding to the measured channel information.

As described above, the comparison result is used to reflect the accuracy of the channel information prediction. A smaller difference between a group of predicted channel information and measured channel information indicates higher prediction accuracy. Alternatively, a higher channel correlation between a group of predicted channel information and measured channel information indicates higher prediction accuracy.

When the prediction is inaccurate, the at least one piece of channel information includes the channel information measured based on the first reference signal. In other words, the content fed back by the second device to the first device includes the channel information measured based on the first reference signal.

In other words, when the prediction is inaccurate, the content fed back by the second device to the first device includes at least actually measured channel information, so that the first device can obtain more accurate channel information.

When the prediction is accurate, the at least one piece of channel information includes the p pieces of predicted channel information. In other words, the content fed back by the second device to the first device may include the p pieces of predicted channel information.

When the prediction is accurate, the second device may feed back the predicted channel information to the first device. In this way, a channel aging problem can be alleviated by using the channel information prediction.

The following separately uses a case in which n=1 (Example 1) and a case in which n>1 (Example 2) as examples to describe a manner of determining the at least one piece of channel information.

Example 1:

When n=1, step 520 may be understood as: Determine, based on a comparison result between one group of predicted channel information and measured channel information, whether the p pieces of predicted channel information are valid, in other words, determine the at least one piece of channel information based on the comparison result between the group of predicted channel information and measured channel information.

For example, a manner of determining the at least one piece of channel information may be implemented in the following manners (a manner 1 to a manner 4).

Manner 1:

Optionally, the at least one piece of channel information includes the channel information measured based on the first reference signal. In other words, the content fed back by the second device to the first device includes the channel information measured based on the first reference signal. If the difference between the n pieces of predicted channel information and the n pieces of measured channel information satisfies a preset condition 1, it is determined that the p pieces of predicted channel information are invalid.

If the difference between the n pieces of predicted channel information and the n pieces of measured channel information does not satisfy the preset condition 1, it is determined that the p pieces of predicted channel information are valid. The at least one piece of channel information may not include the channel information measured based on the first reference signal.

In other words, when the difference between the n pieces of predicted channel information and the n pieces of measured channel information satisfies the preset condition 1, it may be determined that the prediction result is inaccurate, and the content fed back to the first device includes at least the channel information measured based on the first reference signal. When the difference between the n pieces of predicted channel information and the n pieces of measured channel information does not satisfy the preset condition 1, it is determined that the prediction result is accurate, and the content fed back to the first device may not include the channel information measured based on the first reference signal. For example, it is determined that the prediction result is accurate, and the content fed back to the first device may include the p pieces of predicted channel information.

Manner 2:

Optionally, step 520 may include: The at least one piece of channel information includes the channel information measured based on the first reference signal. In other words, the content fed back by the second device to the first device includes the channel information measured based on the first reference signal. If the channel correlation between the n pieces of predicted channel information and the n pieces of measured channel information satisfies a preset condition 2, it is determined that the p pieces of predicted channel information are invalid.

If the channel correlation between the n pieces of predicted channel information and the n pieces of measured channel information does not satisfy the preset condition 2, it is determined that the p pieces of predicted channel information are valid. The at least one piece of channel information may not include the channel information measured based on the first reference signal.

In other words, when the channel correlation between the n pieces of predicted channel information and the n pieces of measured channel information satisfies the preset condition 2, it may be determined that the prediction result is inaccurate, and the content fed back to the first device includes at least the channel information measured based on the first reference signal. When the channel correlation between the n pieces of predicted channel information and the n pieces of measured channel information does not satisfy the preset condition 1, it is determined that the prediction result is accurate, and the content fed back to the first device may not include the channel information measured based on the first reference signal. For example, it is determined that the prediction result is accurate, and the content fed back to the first device may include the p pieces of predicted channel information.

Manner 3:

Optionally, it is determined that the p pieces of predicted channel information are invalid. The at least one piece of channel information includes the channel information measured based on the first reference signal. In other words, the content fed back by the second device to the first device includes the channel information measured based on the first reference signal. The difference between the n pieces of predicted channel information and the n pieces of measured channel information satisfies a preset condition 1, and the channel correlation between the n pieces of predicted channel information and the n pieces of measured channel information satisfies a preset condition 2.

If the difference between the n pieces of predicted channel information and the n pieces of measured channel information does not satisfy the preset condition 1, or the channel correlation between the n pieces of predicted channel information and the n pieces of measured channel information does not satisfy the preset condition 2, it is determined that the p pieces of predicted channel information are valid. The at least one piece of channel information may not include the channel information measured based on the first reference signal.

In other words, when the difference between the n pieces of predicted channel information and the n pieces of measured channel information satisfies the preset condition 1, and the channel correlation between the n pieces of predicted channel information and the n pieces of measured channel information satisfies the preset condition 2, it may be determined that the prediction result is inaccurate, and the content fed back to the first device includes at least the channel information measured based on the first reference signal. When the difference between the n pieces of predicted channel information and the n pieces of measured channel information does not satisfy the preset condition 1, or the channel correlation between the n pieces of predicted channel information and the n pieces of measured channel information does not satisfy the preset condition 2, it is determined that the prediction result is accurate, and the content fed back to the first device may not include the channel information measured based on the first reference signal. For example, it is determined that the prediction result is accurate, and the content fed back to the first device may include the p pieces of predicted channel information.

Manner 4:

Optionally, it is determined that the p pieces of predicted channel information are invalid. The at least one piece of channel information includes the channel information measured based on the first reference signal. In other words, the content fed back by the second device to the first device includes the channel information measured based on the first reference signal. The difference between the n pieces of predicted channel information and the n pieces of measured channel information satisfies a preset condition 1, or the channel correlation between the n pieces of predicted channel information and the n pieces of measured channel information satisfies a preset condition 2.

If the difference between the n pieces of predicted channel information and the n pieces of measured channel information does not satisfy the preset condition 1, and the channel correlation between the n pieces of predicted channel information and the n pieces of measured channel information does not satisfy the preset condition 2, it is determined that the p pieces of predicted channel information are valid. The at least one piece of channel information may not include the channel information measured based on the first reference signal.

In other words, when the difference between the n pieces of predicted channel information and the n pieces of measured channel information satisfies the preset condition 1, or the channel correlation between the n pieces of predicted channel information and the n pieces of measured channel information satisfies the preset condition 2, it may be determined that the prediction result is inaccurate, and the content fed back to the first device includes at least the channel information measured based on the first reference signal. When the difference between the n pieces of predicted channel information and the n pieces of measured channel information does not satisfy the preset condition 1, and the channel correlation between the n pieces of predicted channel information and the n pieces of measured channel information does not satisfy the preset condition 2, it is determined that the prediction result is accurate, and the content fed back to the first device may not include the channel information measured based on the first reference signal. For example, it is determined that the prediction result is accurate, and the content fed back to the first device may include the p pieces of predicted channel information.

The following describes the preset condition 1 and the preset condition 2 by using examples.

That the difference between the n pieces of predicted channel information and the n pieces of measured channel information meets a preset condition 1 may include: The difference between the n pieces of predicted channel information and the n pieces of measured channel information is greater than or equal to a difference threshold corresponding to the difference.

For example, that the difference between the n pieces of predicted channel information and the n pieces of measured channel information meets the preset condition 1 may include: All differences between the n pieces of predicted channel information and the n pieces of measured channel information are greater than or equal to a difference threshold corresponding to all the differences.

For example, the n pieces of predicted channel information may be predicted channel information #2, and the n pieces of measured channel information may be measured channel information #2. All differences between the predicted channel information #2 and the measured channel information #2 may include two differences between the predicted channel information #2 and the measured channel information #2, for example, an MSE between the predicted channel information #2 and the measured channel information #2 and an NMSE between the predicted channel information #2 and the measured channel information #2.

That the difference between the n pieces of predicted channel information and the n pieces of measured channel information meets a preset condition 1 is: The MSE between the predicted channel information #2 and the measured channel information #2 is greater than or equal to a difference threshold corresponding to the MSE, and the NMSE between the predicted channel information #2 and the measured channel information #2 is greater than or equal to a difference threshold corresponding to the NMSE.

Alternatively, that the difference between the n pieces of predicted channel information and the n pieces of measured channel information meets a preset condition 1 may include: A part of the difference between the n pieces of predicted channel information and the n pieces of measured channel information is greater than or equal to a difference threshold corresponding to the part of the difference.

A quantity of the part of the difference may be set based on a requirement. For example, the part of the difference may be at least Z differences. Setting of Z may be adjusted based on the quantity of all differences.

For example, the n pieces of predicted channel information may be predicted channel information #2, and the n pieces of measured channel information may be measured channel information #2. All differences between the predicted channel information #2 and the measured channel information #2 may include two differences between the predicted channel information #2 and the measured channel information #2, for example, an MSE between the predicted channel information #2 and the measured channel information #2 and an NMSE between the predicted channel information #2 and the measured channel information #2. Z may be 1.

That the difference between the n pieces of predicted channel information and the n pieces of measured channel information meets a preset condition 1 is: The MSE between the predicted channel information #2 and the measured channel information #2 is greater than or equal to a difference threshold corresponding to the MSE, or the NMSE between the predicted channel information #2 and the measured channel information #2 is greater than or equal to a difference threshold corresponding to the NMSE.

That the channel correlation between the n pieces of predicted channel information and the n pieces of measured channel information meets a preset condition 2 may include: The channel correlation between the n pieces of predicted channel information and the n pieces of measured channel information is less than or equal to a similarity threshold corresponding to the channel correlation.

For example, that the channel correlation between the n pieces of predicted channel information and the n pieces of measured channel information meets the preset condition 2 may include: All channel correlations between the n pieces of predicted channel information and the n pieces of measured channel information are less than or equal to a similarity threshold corresponding to all the channel correlations.

For example, the n pieces of predicted channel information may be predicted channel information #2, and the n pieces of measured channel information may be measured channel information #2. All the channel correlations between the predicted channel information #2 and the measured channel information #2 may include two channel correlations between the predicted channel information #2 and the measured channel information #2, for example, a GCS between the predicted channel information #2 and the measured channel information #2 and an SGCS between the predicted channel information #2 and the measured channel information #2.

That the channel correlation between the n pieces of predicted channel information and the n pieces of measured channel information meets a preset condition 2 is: The GCS between the predicted channel information #2 and the measured channel information #2 is less than or equal to a similarity threshold corresponding to the GCS, and the SGCS between the predicted channel information #2 and the measured channel information #2 is less than or equal to a similarity threshold corresponding to the SGCS.

Alternatively, that the channel correlation between the n pieces of predicted channel information and the n pieces of measured channel information meets a preset condition 2 may include: A part of the channel correlation between the n pieces of predicted channel information and the n pieces of measured channel information is less than or equal to a similarity threshold corresponding to the part of the channel correlation.

A quantity of indicators of the part of the channel correlation may be set based on a requirement. For example, the part of the channel correlation may be at least Z' channel correlations. Setting of Z' may be adjusted based on the quantity of all channel correlation indicators.

For example, the n pieces of predicted channel information may be predicted channel information #2, and the n pieces of measured channel information may be measured channel information #2. All the channel correlations between the predicted channel information #2 and the measured channel information #2 may include two channel correlations between the predicted channel information #2 and the measured channel information #2, for example, a GCS between the predicted channel information #2 and the measured channel information #2 and an SGCS between the predicted channel information #2 and the measured channel information #2. Z' may be 1. That the channel correlation between the n pieces of predicted channel information and the n pieces of measured channel information meets a preset condition 2 is: The GCS between the predicted channel information #2 and the measured channel information #2 is less than or equal to a similarity threshold corresponding to the GCS, or the SGCS between the predicted channel information #2 and the measured channel information #2 is less than or equal to a similarity threshold corresponding to the SGCS.

It should be understood that the foregoing is merely examples, and the preset condition 1 and the preset condition 2 may be set based on a requirement.

In addition, the foregoing determining criteria may be used in combination.

For example, when the comparison result between the n pieces of predicted channel information and the n pieces of measured channel information satisfies any one of the following, it is determined that the p pieces of predicted channel information are invalid, and the at least one piece of channel information includes the channel information measured based on the first reference signal:

all the differences between the n pieces of predicted channel information and the n pieces of measured channel information are greater than or equal to the difference threshold corresponding to all the differences;

all the channel correlations between the n pieces of predicted channel information and the n pieces of measured channel information are less than or equal to the similarity threshold corresponding to all the channel correlations; or

the part of the difference between the n pieces of predicted channel information and the n pieces of measured channel information is greater than or equal to the difference threshold corresponding to the part of the difference, or the part of the channel correlation between the n pieces of predicted channel information and the n pieces of measured channel information is less than or equal to the similarity threshold corresponding to the part of the channel correlation.

The foregoing combination manners are merely examples. This is not limited in this embodiment of this application.

Example 2:

When n>1, step 520 may be understood as: Determine, based on a comparison result between multiple groups of predicted channel information and measured channel information, whether the p pieces of predicted channel information are valid, in other words, determine, based on the comparison result between the multiple groups of predicted channel information and measured channel information, the content fed back to the first device.

The following uses Manner 5 to Manner 9 as examples to describe step 520.

Manner 5:

Determining is performed for the n groups of predicted channel information and the measured channel information with reference to the conditions in Example 1. Specifically, a determining result obtained based on y groups of predicted channel information and measured channel information in the n groups of predicted channel information and measured channel information is that a prediction result is inaccurate, and the content fed back to the first device is determined based on y. y is an integer greater than or equal to 0.

In other words, the determining result obtained based on the y groups of predicted channel information and measured channel information is that the prediction result is inaccurate. If y is large, the at least one piece of channel information includes the channel information measured based on the first reference signal. If y is not large, the at least one piece of channel information may not include the channel information measured based on the first reference signal. For example, the at least one piece of channel information includes the p pieces of predicted channel information.

For example, when y is greater than or equal to a specified threshold, it is determined that the p pieces of predicted channel information are invalid, and the at least one piece of channel information includes the channel information measured based on the first reference signal. If y is less than the specified threshold, it is determined that the p pieces of predicted channel information are valid, and the at least one piece of channel information may not include the channel information measured based on the first reference signal. For example, the at least one piece of channel information includes the p pieces of predicted channel information.

For example, when a ratio of y to n is greater than or equal to a specified threshold, it is determined that the p pieces of predicted channel information are invalid, and the at least one piece of channel information includes the channel information measured based on the first reference signal. If the ratio of y to n is less than the specified threshold, it is determined that the p pieces of predicted channel information are valid, and the at least one piece of channel information may not include the channel information measured based on the first reference signal. For example, the at least one piece of channel information includes the p pieces of predicted channel information.

The following uses Manner 1 to Manner 4 as examples to describe a possible implementation of Manner 5.

For example, it is determined that the p pieces of predicted channel information are invalid, and the at least one piece of channel information includes the channel information measured based on the first reference signal. A difference between y pieces of predicted channel information in the n pieces of predicted channel information and corresponding y pieces of measured channel information in the n pieces of measured channel information satisfies the preset condition 1. y is greater than or equal to a threshold #2, or the ratio of y to n is greater than or equal to a threshold #3 (an example of a second threshold).

The difference between the y pieces of predicted channel information in the n pieces of predicted channel information and the corresponding y pieces of measured channel information in the n pieces of measured channel information satisfies the preset condition 1. When y is less than the threshold #2 or the ratio of y to n is less than the threshold #3, it is determined that the p pieces of predicted channel information are valid. The at least one piece of channel information may not include the channel information measured based on the first reference signal. For example, the at least one piece of channel information includes the p pieces of predicted channel information.

For example, it is determined that the p pieces of predicted channel information are invalid, and the at least one piece of channel information includes the channel information measured based on the first reference signal. A channel correlation between y pieces of predicted channel information in the n pieces of predicted channel information and corresponding y pieces of measured channel information in the n pieces of measured channel information satisfies the preset condition 2. y is greater than or equal to a threshold #2, or the ratio of y to n is greater than or equal to a threshold #3.

The difference between the y pieces of predicted channel information in the n pieces of predicted channel information and the corresponding y pieces of measured channel information in the n pieces of measured channel information satisfies the preset condition 2. When y is less than the threshold #2 or the ratio of y to n is less than the threshold #3, it is determined that the p pieces of predicted channel information are valid. The at least one piece of channel information may not include the channel information measured based on the first reference signal. For example, the at least one piece of channel information includes the p pieces of predicted channel information.

For example, it is determined that the p pieces of predicted channel information are invalid, and the at least one piece of channel information includes the channel information measured based on the first reference signal. A difference between y pieces of predicted channel information in the n pieces of predicted channel information and corresponding y pieces of measured channel information in the n pieces of measured channel information satisfies the preset condition 1, and a channel correlation between the y pieces of predicted channel information and the corresponding y pieces of measured channel information satisfies the preset condition 2. y is greater than or equal to a threshold #2, or the ratio of y to n is greater than or equal to a threshold #3.

The difference between the y pieces of predicted channel information in the n pieces of predicted channel information and the corresponding y pieces of measured channel information in the n pieces of measured channel information satisfies the preset condition 1, and the channel correlation between the y pieces of predicted channel information and the corresponding y pieces of measured channel information satisfies the preset condition 2. When y is less than the threshold #2 or the ratio of y to n is less than the threshold #3, it is determined that the p pieces of predicted channel information are valid. The at least one piece of channel information may not include the channel information measured based on the first reference signal. For example, the at least one piece of channel information includes the p pieces of predicted channel information.

For example, it is determined that the p pieces of predicted channel information are invalid, and the at least one piece of channel information includes the channel information measured based on the first reference signal. A difference between y pieces of predicted channel information in the n pieces of predicted channel information and corresponding y pieces of measured channel information in the n pieces of measured channel information satisfies the preset condition 1, or a channel correlation between the y pieces of predicted channel information and the corresponding y pieces of measured channel information satisfies the preset condition 2. y is greater than or equal to a threshold #2, or the ratio of y to n is greater than or equal to a threshold #3.

The difference between the y pieces of predicted channel information in the n pieces of predicted channel information and the corresponding y pieces of measured channel information in the n pieces of measured channel information satisfies the preset condition 1, or the channel correlation between the y pieces of predicted channel information and the corresponding y pieces of measured channel information satisfies the preset condition 2. When y is less than the threshold #2 or the ratio of y to n is less than the threshold #3, it is determined that the p pieces of predicted channel information are valid. The at least one piece of channel information may not include the channel information measured based on the first reference signal. For example, the at least one piece of channel information includes the p pieces of predicted channel information.

It should be understood that the foregoing is merely an example, and constitute no limitation on the solution in this embodiment of this application.

Manner 6:

Optionally, it is determined that the p pieces of predicted channel information are invalid, and the at least one piece of channel information includes the channel information measured based on the first reference signal. The difference between the n pieces of predicted channel information and the n pieces of measured channel information satisfies a preset condition 3.

If the difference between the n pieces of predicted channel information and the n pieces of measured channel information does not satisfy the preset condition 3, it is determined that the p pieces of predicted channel information are valid. The at least one piece of channel information may not include the channel information measured based on the first reference signal. For example, the at least one piece of channel information includes the p pieces of predicted channel information.

Manner 7:

Optionally, it is determined that the p pieces of predicted channel information are invalid, and the at least one piece of channel information includes the channel information measured based on the first reference signal. The channel correlation between the n pieces of predicted channel information and the n pieces of measured channel information satisfies a preset condition 4.

If the channel correlation between the n pieces of predicted channel information and the n pieces of measured channel information does not satisfy the preset condition 4, it is determined that the p pieces of predicted channel information are valid. The at least one piece of channel information may not include the channel information measured based on the first reference signal. For example, the at least one piece of channel information includes the p pieces of predicted channel information.

Manner 8:

Optionally, it is determined that the p pieces of predicted channel information are invalid, and the at least one piece of channel information includes the channel information measured based on the first reference signal. The difference between the n pieces of predicted channel information and the n pieces of measured channel information satisfies a preset condition 3, or the channel correlation between the n pieces of predicted channel information and the n pieces of measured channel information satisfies a preset condition 4.

If the difference between the n pieces of predicted channel information and the n pieces of measured channel information does not satisfy the preset condition 3, and the channel correlation between the n pieces of predicted channel information and the n pieces of measured channel information does not satisfy the preset condition 4, it is determined that the p pieces of predicted channel information are valid. The at least one piece of channel information may not include the channel information measured based on the first reference signal. For example, the at least one piece of channel information includes the p pieces of predicted channel information.

Manner 9:

Optionally, it is determined that the p pieces of predicted channel information are invalid, and the at least one piece of channel information includes the channel information measured based on the first reference signal. The difference between the n pieces of predicted channel information and the n pieces of measured channel information satisfies a preset condition 3, and the channel correlation between the n pieces of predicted channel information and the n pieces of measured channel information satisfies a preset condition 4.

If the difference between the n pieces of predicted channel information and the n pieces of measured channel information does not satisfy the preset condition 3, or the channel correlation between the n pieces of predicted channel information and the n pieces of measured channel information does not satisfy the preset condition 4, it is determined that the p pieces of predicted channel information are valid. The at least one piece of channel information may not include the channel information measured based on the first reference signal. For example, the at least one piece of channel information includes the p pieces of predicted channel information.

The following describes the preset condition 3 and the preset condition 4 by using examples.

That the difference between the n pieces of predicted channel information and the n pieces of measured channel information meets a preset condition 3 may include: A statistic of the difference between the n pieces of predicted channel information and the n pieces of measured channel information is greater than or equal to a difference threshold corresponding to the difference.

The statistic may be a largest value, a smallest value, an average value, a weighted average value, a sum, or the like.

When the weighted average value is calculated, a weight corresponding to each group may be set based on a requirement. For example, a group closer to a current moment is corresponding to a larger weight.

For example, that the difference between the n pieces of predicted channel information and the n pieces of measured channel information meets the preset condition 3 includes: A statistic of all the differences between the n pieces of predicted channel information and the n pieces of measured channel information is greater than or equal to a difference threshold corresponding to all the differences.

Different differences may be corresponding to a same statistic or different statistics.

For example, the n pieces of predicted channel information may include predicted channel information #2 and predicted channel information #3, and the n pieces of measured channel information may include measured channel information #2 and measured channel information #3. All differences may include two differences: an MSE and an NMSE. A statistic corresponding to the MSE may be an average value. A statistic corresponding to the NMSE may be a smallest value. All the differences between the n pieces of predicted channel information and the n pieces of measured channel information may include: an MSE between the predicted channel information #2 and the measured channel information #2, an NMSE between the predicted channel information #2 and the measured channel information #2, an MSE between the predicted channel information #3 and the measured channel information #3, and an NMSE between the predicted channel information #3 and the measured channel information #3.

That the difference between the n pieces of predicted channel information and the n pieces of measured channel information meets a preset condition 3 is: An average value of the MSE between the predicted channel information #2 and the measured channel information #2 and the MSE between the predicted channel information #3 and the measured channel information #3 is greater than or equal to a difference threshold corresponding to the MSE, and a smaller value in the NMSE between the predicted channel information #2 and the measured channel information #2 and the NMSE between the predicted channel information #3 and the measured channel information #3 is greater than or equal to a difference threshold corresponding to the NMSE.

Alternatively, that the difference between the n pieces of predicted channel information and the n pieces of measured channel information meets a preset condition 3 includes: A statistic of a part of the difference between the n pieces of predicted channel information and the n pieces of measured channel information is greater than or equal to a difference threshold corresponding to the part of the difference.

A quantity of the part of the difference may be set based on a requirement. For example, the part of the difference may be at least Z differences. Setting of Z may be adjusted based on the quantity of all differences.

For example, the n pieces of predicted channel information may include predicted channel information #2 and predicted channel information #3, and the n pieces of measured channel information may include measured channel information #2 and measured channel information #3. All differences may include two differences: an MSE and an NMSE. A statistic corresponding to the MSE may be an average value. A statistic corresponding to the NMSE may be a smallest value. All the differences between the n pieces of predicted channel information and the n pieces of measured channel information may include: an MSE between the predicted channel information #2 and the measured channel information #2, an NMSE between the predicted channel information #2 and the measured channel information #2, an MSE between the predicted channel information #3 and the measured channel information #3, and an NMSE between the predicted channel information #3 and the measured channel information #3.

Z may be 1. That the difference between the n pieces of predicted channel information and the n pieces of measured channel information meets a preset condition 3 is: An average value of the MSE between the predicted channel information #2 and the measured channel information #2 and the MSE between the predicted channel information #3 and the measured channel information #3 is greater than or equal to a difference threshold corresponding to the MSE, or a smaller value in the NMSE between the predicted channel information #2 and the measured channel information #2 and the NMSE between the predicted channel information #3 and the measured channel information #3 is greater than or equal to a difference threshold corresponding to the NMSE.

That the channel correlation between the n pieces of predicted channel information and the n pieces of measured channel information meets a preset condition 4 includes: A statistic of the channel correlation between the n pieces of predicted channel information and the n pieces of measured channel information is less than or equal to a similarity threshold corresponding to the channel correlation.

The statistic may be a largest value, a smallest value, an average value, a weighted average value, a sum, or the like.

When the weighted average value is calculated, a weight corresponding to each group may be set based on a requirement. For example, a group closer to a current moment is corresponding to a larger weight.

For example, that the channel correlation between the n pieces of predicted channel information and the n pieces of measured channel information meets the preset condition 4 includes: A statistic of all the channel correlations between the n pieces of predicted channel information and the n pieces of measured channel information is less than or equal to a similarity threshold corresponding to all the channel correlations.

Different channel correlations may be corresponding to a same statistic or different statistics.

For example, the n pieces of predicted channel information may include predicted channel information #2 and predicted channel information #3, and the n pieces of measured channel information may include measured channel information #2 and measured channel information #3. All the channel correlation may include two channel correlations: a GCS and an SGCS. A statistic corresponding to the GCS may be an average value. A statistic corresponding to the SGCS may be a largest value. All the channel correlations between the n pieces of predicted channel information and the n pieces of measured channel information may include: a GCS between the predicted channel information #2 and the measured channel information #2, an SGCS between the predicted channel information #2 and the measured channel information #2, a GCS between the predicted channel information #3 and the measured channel information #3, and an SGCS between the predicted channel information #3 and the measured channel information #3.

That the channel correlation between the n pieces of predicted channel information and the n pieces of measured channel information meets a preset condition 4 is: An average value of the GCS between the predicted channel information #2 and the measured channel information #2 and the GCS between the predicted channel information #3 and the measured channel information #3 is less than or equal to a channel correlation threshold corresponding to the GCS, and a larger value in the SGCS between the predicted channel information #2 and the measured channel information #2 and the SGCS between the predicted channel information #3 and the measured channel information #3 is less than or equal to a channel correlation threshold corresponding to the SGCS.

Alternatively, that the channel correlation between the n pieces of predicted channel information and the n pieces of measured channel information meets a preset condition 4 includes: A statistic of a part of the channel correlation between the n pieces of predicted channel information and the n pieces of measured channel information is greater than or equal to a channel correlation threshold corresponding to the part of the channel correlation.

A quantity of the part of the channel correlation may be set based on a requirement. For example, the part of the channel correlation may be at least Z' channel correlations. Setting of Z' may be adjusted based on a quantity of all the channel correlations.

For example, the n pieces of predicted channel information may include predicted channel information #2 and predicted channel information #3, and the n pieces of measured channel information may include measured channel information #2 and measured channel information #3. All the channel correlation may include two channel correlations: a GCS and an SGCS. A statistic corresponding to the GCS may be an average value. A statistic corresponding to the SGCS may be a largest value. All the channel correlations between the n pieces of predicted channel information and the n pieces of measured channel information may include: a GCS between the predicted channel information #2 and the measured channel information #2, an SGCS between the predicted channel information #2 and the measured channel information #2, a GCS between the predicted channel information #3 and the measured channel information #3, and an SGCS between the predicted channel information #3 and the measured channel information #3.

Z' may be 1. That the channel correlation between the n pieces of predicted channel information and the n pieces of measured channel information meets a preset condition 4 is: An average value of the GCS between the predicted channel information #2 and the measured channel information #2 and the GCS between the predicted channel information #3 and the measured channel information #3 is less than or equal to a channel correlation threshold corresponding to the GCS, or a larger value in the SGCS between the predicted channel information #2 and the measured channel information #2 and the SGCS between the predicted channel information #3 and the measured channel information #3 is less than or equal to a channel correlation threshold corresponding to the SGCS.

It should be understood that the foregoing is merely examples, and the preset condition 3 and the preset condition 4 may be set based on a requirement.

In addition, the foregoing determining criteria may be used in combination. For a combination manner, refer to Example 1. Details are not described herein again.

Further, a label may be added to channel information fed back by the second device to the first device, to indicate whether the fed back channel information is a measurement result or a prediction result.

Optionally, the indication information #1 further indicates a label of the at least one piece of channel information. The label of the at least one piece of channel information respectively indicates that the at least one piece of channel information is a prediction result or a measurement result.

A label of the channel information measured based on the first reference signal indicates that the channel information measured based on the first reference signal is a measurement result. Labels of the p pieces of predicted channel information indicate that the p pieces of predicted channel information are prediction results.

Further, a time reference point may be added to the channel information fed back by the second device to the first device, to indicate a moment corresponding to the fed back channel information.

Optionally, the indication information #1 further indicates a time reference point of the at least one piece of channel information. The time reference point of the at least one piece of channel information respectively indicates a moment corresponding to the at least one piece of channel information.

A time reference point of the p pieces of predicted channel information indicates a moment corresponding to the p pieces of predicted channel information.

A time reference point corresponding to the channel information measured based on the first reference signal indicates a measurement moment of the channel information measured based on the first reference signal. The measurement moment of the channel information measured based on the first reference signal is a moment for measuring a first reference channel.

Optionally, when the at least one piece of channel information includes the p pieces of predicted channel information, the indication information #1 further indicates the time reference point of the p pieces of predicted channel information. The time reference point of the p pieces of predicted channel information respectively indicates the moment corresponding to the p pieces of predicted channel information.

Optionally, when the at least one piece of channel information includes the p pieces of predicted channel information and the channel information measured based on the first reference signal, the indication information #1 further indicates the time reference point of the p pieces of predicted channel information. The time reference point of the p pieces of predicted channel information respectively indicates the moment corresponding to the p pieces of predicted channel information.

For example, the first device may send indication information to indicate the second device to perform step 520 and step 530.

Alternatively, the second device may periodically perform step 520 and step 530.

The periodicity may be predefined, or may be indicated by the first device, or may be determined by the second device.

Alternatively, the second device may determine to perform step 520 and step 530.

The following describes step 540 by using an example.

After receiving the indication information #1, the first device may perform data transmission based on the at least one piece of channel information.

In a possible implementation, when the at least one piece of channel information includes the channel information measured based on the first reference signal, the first device may perform data transmission by using the channel information measured based on the first reference signal. When the at least one piece of channel information does not include the channel information measured based on the first reference signal, the first device may perform data transmission based on the p pieces of predicted channel information.

For example, the first device may determine, based on the label, that the at least one piece of channel information indicated by the indication information #1 is a prediction result or a measurement result.

In other words, the first device may determine, based on the label, that the at least one piece of channel information indicated by the indication information #1 includes the p pieces of predicted channel information and/or the channel information measured based on the first reference signal.

For example, the first device may determine, based on the time reference point, that the at least one piece of channel information indicated by the indication information #1 is a prediction result or a measurement result.

Specifically, the first device may determine, based on the time reference point, the moment corresponding to the channel information. The moment corresponding to the channel information may be used to determine a prediction result or a measurement result.

For example, if the moment corresponding to the at least one piece of channel information indicated by the indication information #1 is before the feedback moment, the channel information is a measurement result. For another example, if the moment corresponding to the at least one piece of channel information indicated by the indication information #1 is after the feedback moment, the channel information is a prediction result.

For another example, a time reference point indicated by the indication information #1 includes only a time reference point of a prediction result, and does not include a time reference point of a measurement result. In this case, if the channel information indicated by the indication information #1 includes channel information that does not have a time reference point, the first device may determine that the channel information indicated by the indication information #1 includes the measurement result.

Optionally, the method 500 further includes: The second device sends indication information #2 (an example of second indication information) to the first device. The indication information #2 indicates the comparison result.

For example, the indication information #2 may indicate the difference and/or the channel correlation between the n pieces of predicted channel information and the n pieces of measured channel information.

The foregoing describes a solution in which the second device determines the feedback content based on the comparison result. In another possible implementation, the first device may alternatively determine, based on the comparison result, information used for data transmission. The following describes the another possible implementation.

In a possible implementation, step 520 to step 540 in the method 500 may alternatively be replaced with the following steps.

521: The second device sends indication information #3 to the first device. The indication information #3 indicates a comparison result between n pieces of predicted channel information and n pieces of measured channel information, channel information measured based on the first reference signal, and p pieces of predicted channel information.

531: The second device selects, based on the comparison result, at least one piece of channel information from the channel information measured based on the first reference signal and the predicted p pieces of channel information, to perform data transmission.

In step 521 and step 531, the second device sends the comparison result to the first device, and the first device determines, based on the comparison result, the channel information used for data transmission.

Alternatively, in step 521, the second device may further send the n pieces of measured channel information to the first device.

If the first device stores the n pieces of predicted channel information corresponding to the n pieces of measured channel information, the first device may perform comparison to obtain the comparison result, and further determine, based on the comparison result, the channel information used for data transmission.

If the second device stores the n pieces of predicted channel information corresponding to the n pieces of measured channel information, the first device may receive the n pieces of predicted channel information from the second device. The first device performs comparison to obtain the comparison result, and further determines, based on the comparison result, the channel information used for data transmission.

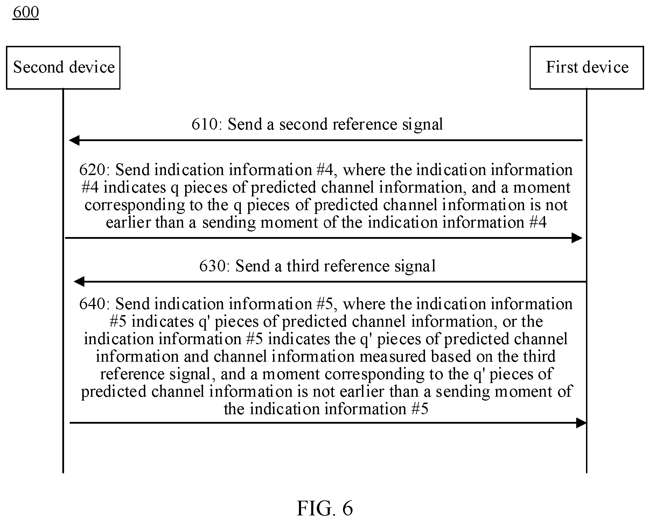

FIG. 6 is a diagram of another communication method according to an embodiment of this application. As shown in FIG. 6, the method 600 includes the following steps.

610: A first device sends a second reference signal to a second device.

620: The first device receives indication information #4 (an example of third indication information) sent by the second device. The indication information #4 indicates q pieces of predicted channel information. A moment corresponding to the q pieces of predicted channel information is not earlier than a sending moment of the indication information #4. q is a positive integer.

630: The first device sends a third reference signal to the second device.

640: The first device receives indication information #5 (an example of fourth indication information) sent by the second device. The indication information #5 indicates q' pieces of predicted channel information and channel information measured based on the third reference signal. Alternatively, the indication information #5 indicates channel information measured based on the third reference signal. A moment corresponding to the q' pieces of predicted channel information is not earlier than a sending moment of the indication information #5. q' is a positive integer.

A sequence between steps 610 and 620 and steps 630 and 640 may not be limited in this application. For the second reference signal and the third reference signal in the method 600, refer to the related descriptions of the first reference signal in the method 500. For the q pieces of predicted channel information and the q' pieces of predicted channel information, refer to the related descriptions of the p pieces of predicted channel information in the method 500. q and q' may be the same or may be different. For the indication information #4 and the indication information #5, refer to the related descriptions of the indication information #1 in the method 500. Specifically, for the indication information #4, refer to the related descriptions in a case in which the indication information #1 indicates the p pieces of predicted channel information. For the indication information #5, refer to the related descriptions in a case in which the indication information #1 indicates the p pieces of predicted channel information and the channel information measured based on the first reference signal, or the indication information #1 indicates the channel information measured based on the first reference signal. To avoid repetition, details are not described herein again.

Optionally, when the q pieces of predicted channel information are valid, the indication information #4 indicates the q pieces of predicted channel information.

Optionally, when the q' predicted channel information are invalid, the indication information #5 indicates the q' predicted channel information and the channel information measured based on the third reference signal, or the indication information #5 indicates the channel information measured based on the third reference signal.

For a manner of determining whether the q pieces of predicted channel information and the q' pieces of predicted channel information are valid, refer to the manner of determining whether the p pieces of predicted channel information are valid in the method 500.

Optionally, the q' predicted pieces of channel information are invalid based on a comparison result between r pieces of predicted channel information and r pieces of measured channel information. The r pieces of predicted channel information are corresponding to the r pieces of measured channel information, r is a positive integer, and a moment corresponding to the r pieces of predicted channel information is earlier than the sending moment of the indication information #5.

For the r pieces of predicted channel information and the r pieces of measured channel information, refer to the related descriptions of the n pieces of predicted channel information and the n pieces of measured channel information in the method 500.

Another solution in the method 500 is also applicable to the method 600. To avoid repetition, details are not described herein again.

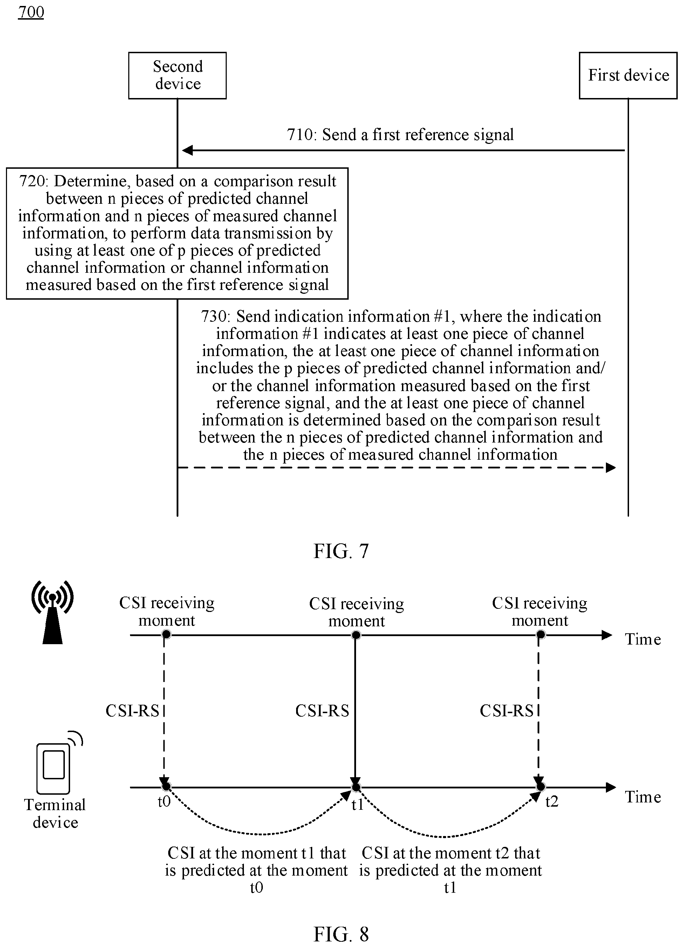

FIG. 7 is a diagram of another communication method according to an embodiment of this application. As shown in FIG. 7, the method 700 includes the following steps.

710: A first device sends a first reference signal to a second device.

In this case, the first reference signal may be an uplink reference signal, and channel information may be uplink channel information. For example, the first reference signal may be one or more of an SRS, a DMRS, or the like. For example, the second device may be a network device, and the first device may be a terminal device.

720: The second device determines, based on a comparison result between n pieces of predicted channel information and n pieces of measured channel information, to perform data transmission by using at least one of p pieces of predicted channel information or channel information measured based on the first reference signal.

The n pieces of predicted channel information are corresponding to the n pieces of measured channel information. A moment corresponding to the p pieces of predicted channel information is later than a measurement moment of the first reference signal. n is a positive integer, and p is a positive integer.

In other words, in step 720, the second device may determine, based on the comparison result, channel information used for data transmission.

Optionally, the method 700 further includes step 730.

730: The second device sends indication information #1 (an example of first indication information) to the first device. The indication information #1 indicates at least one piece of channel information. The at least one piece of channel information includes the p pieces of predicted channel information and/or the channel information measured based on the first reference signal. The at least one piece of channel information is determined based on the comparison result between the n pieces of predicted channel information and the n pieces of measured channel information.

For specific descriptions of content that is the same as or corresponding to the method 500 in the method 700, refer to the method 500. To avoid repetition, details are not described herein again.

The following describes the method 500 by using an example with reference to FIG. 8 to FIG. 11. In FIG. 8 to FIG. 11, only an example in which the first device may be a network device and the second device may be a terminal device is used for description, and does not constitute a limitation on the scope of embodiments of this application. In FIG. 8 to FIG. 11, only an example in which the reference signal is a CSI-RS is used for description, and does not constitute a limitation on the solutions in embodiments of this application. For specific descriptions, refer to the related descriptions in the method 500. To avoid repetition, a part of the descriptions are properly omitted when FIG. 8 to FIG. 11 are described. In FIG. 8 to FIG. 11, the channel information is CSI.

FIG. 8 is a diagram of a CSI feedback procedure. In the CSI feedback procedure shown in FIG. 8, the terminal device may predict CSI at one future moment. In this case, p is 1.

The terminal device may predict CSI at one future moment based on the m pieces of measured CSI. Specifically, the terminal device may predict the CSI at the future moment by using a prediction model. To be specific, the m pieces of measured CSI are input into the prediction model for processing, to predict the CSI at the future moment.

For example, the prediction model may be an AI prediction model, for example, an RNN, an LSTM, or a transformer.

It should be understood that the foregoing is merely an example. The terminal device may alternatively predict the future CSI in another manner, for example, predict the future CSI through Kalman filtering. For example, the m pieces of measured CSI may include CSI measured at a current moment and CSI measured at previous m-1 moments. The CSI measured at the current moment is CSI measured based on a current reference signal. In this case, the CSI measured at the current moment and the CSI measured at the previous m-1 moments may be input into the prediction model, to predict CSI at one future moment. The future moment is a future moment relative to the current moment.

The prediction model may be deployed on the terminal device, and the terminal device may monitor performance of the prediction model.

As shown in FIG. 8, CSI feedback moments include t0, t1, and t2. The moment t0 is earlier than the moment t1, and the moment t2 is later than the moment t1.

An example in which the current moment is the moment t1 is used below for description. CSI at the moment t2 is predicted at the moment t1. Specifically, the CSI-RS is measured at the moment t1, to obtain CSI measured at the moment t1. The CSI measured at the moment t1 may also be referred to as a CSI measurement result at the moment t1. The CSI measured at the moment t1 and the CSI measured at the previous m-1 moments are input into the prediction model, to predict CSI at the future moment t2, that is, obtain the CSI at the moment t2 that is predicted at the moment t1. The terminal device stores CSI at the moment t1 that is predicted at the moment t0. The CSI at the moment t1 that is predicted at the moment t0 may also be referred to as a CSI prediction result at the moment t1. The terminal device may compare the CSI measured at the moment t1 with the CSI at the moment t1 that is predicted at the moment t0, and determine, based on a comparison result, content fed back by the terminal device at the moment t1.

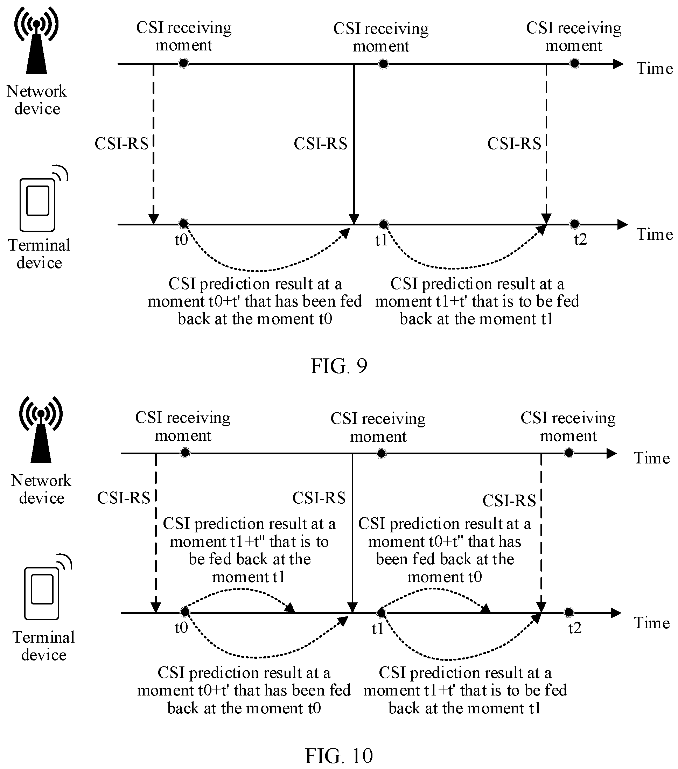

FIG. 9 is a diagram of another CSI feedback procedure. In the CSI feedback procedure shown in FIG. 9, the terminal device may predict CSI at one future moment. In this case, p is 1.

The solution shown in FIG. 8 is a simple example of the method 500. In the solution shown in FIG. 8, the CSI feedback moments and CSI measurement moments overlap at the moment t1. However, a CSI feedback moment is usually different from a CSI measurement moment. For example, CSI fed back at a moment t is usually CSI measured before the moment t or CSI predicted before the moment t.

As shown in FIG. 9, feedback moments may include t0, t1, and t2. The moment t0 is earlier than the moment t1, and the moment t2 is later than the moment t1. t0, t1, and t2 may be adjacent feedback moments, or may be non-adjacent feedback moments.

The method 500 is described below by using CSI fed back at the moment t1 as an example.

S81: The terminal device receives, at a moment t1', a CSI-RS (an example of a reference signal #1) sent by the network device.

The terminal device may measure CSI based on the CSI-RS, to obtain CSI measured at the moment t1 (an example of channel information measured based on the reference signal #1). The moment t1' is earlier than the moment t1. The CSI-RS is a CSI-RS shown by a solid arrow in FIG. 9.

The CSI measured at the moment t1' may also be referred to as a CSI measurement result at the moment t1'.

S82: The terminal device compares the CSI (an example of the n pieces of measured channel information) measured at the moment t1' with CSI (an example of the n pieces of predicted channel information) at a moment t1" that is predicted before the moment t1". In this case, n may be 1.

The predicted CSI at the moment t1" may also be referred to as a CSI prediction result at the moment t1".

For the CSI measured at the moment t1', a moment corresponding to the CSI is the moment t1'. For the predicted CSI at the moment t1", a moment corresponding to the CSI is the moment t1".

For example, as shown in FIG. 9, t1"=t0+t'. In this case, t' may represent a time difference between the moment corresponding to the predicted CSI and the CSI feedback moment. If t0 and t1 are adjacent feedback moments, t' is a value less than a feedback interval.

It should be understood that, in FIG. 9, the predicted CSI at the moment t1" is CSI fed back to the network device at the moment t0. In another possible implementation, the predicted CSI at the moment t1" may alternatively be CSI fed back to the network device at another moment that is before the moment t1 and that is other than the moment t0. For example, a difference between t1' and t1" is less than or equal to a threshold #1. For example, t1'=t1".

The predicted CSI at the moment t1" is obtained through prediction by using a prediction model. A result of the comparison may be used to reflect performance of the prediction model.

The terminal device may determine accuracy of the prediction result based on the comparison result.

For example, the comparison result between the CSI prediction result and the CSI measurement result may include a difference and/or a channel correlation between the CSI prediction result and the CSI measurement result.

For example, the difference between the CSI prediction result and the CSI measurement result may include at least one of an MSE or an NMSE between the CSI prediction result and the CSI measurement result.

For example, the channel correlation between the CSI prediction result and the CSI measurement result may include at least one of a GCS or an SGCS between the CSI prediction result and the CSI measurement result.

A case in which the terminal device determines, based on a comparison result between one group of CSI prediction result and CSI measurement result, whether prediction of the prediction model is accurate is described below by using an example. The group of CSI prediction result and CSI measurement result is a CSI prediction result and a CSI measurement result that have a correspondence. That is, n=1. Determining whether the prediction of the prediction model is accurate is determining whether the p pieces of predicted channel information are valid.

For ease of understanding, an example in which the CSI measurement result at the moment t1' and the CSI prediction result at the moment t1" are used as one group of CSI prediction result and CSI measurement result is used below for description.

For example, if one or more differences between the CSI measurement result at the moment t1' and the CSI prediction result at the moment t1" are greater than or equal to a threshold corresponding to the one or more differences, it is determined that the CSI prediction result is inaccurate.

Alternatively, if one or more channel correlations between the CSI measurement result at the moment t1' and the CSI prediction result at the moment t1" are less than or equal to a threshold corresponding to the one or more channel correlations, it is determined that the CSI prediction result is inaccurate.

Alternatively, if one or more differences between the CSI measurement result at the moment t1' and the CSI prediction result at the moment t1" are greater than or equal to a threshold corresponding to the one or more differences, or one or more channel correlations between the CSI measurement result at the moment t1' and the CSI prediction result at the moment t1" are less than or equal to a threshold corresponding to the one or more channel correlations, it is determined that the CSI prediction result is inaccurate.

Alternatively, if one or more differences between the CSI measurement result at the moment t1' and the CSI prediction result at the moment t1" are greater than or equal to a threshold corresponding to the one or more differences, and one or more channel correlations between the CSI measurement result at the moment t1' and the CSI prediction result at the moment t1" are less than or equal to a threshold corresponding to the one or more channel correlations, it is determined that the CSI prediction result is inaccurate.

Because n is 1, and the CSI prediction result is inaccurate, the terminal device may determine that the prediction of the prediction model is inaccurate, that is, determine that the p pieces of predicted channel information are invalid.

When the comparison result between the CSI measurement result at the moment t1' and the CSI prediction result at the moment t1" does not meet the foregoing conditions, it is determined that the CSI prediction result is accurate. The terminal device may determine that the prediction of the prediction model is accurate, that is, determine that the p pieces of predicted channel information are valid. To avoid repetition, details are not described herein again.

It should be understood that only one group of CSI prediction result and CSI measurement result is used as an example above for description. In another possible implementation, n may be an integer greater than 1. In other words, prediction performance of the CSI may be monitored at multiple moments.

A case in which the terminal device determines, based on a comparison result between multiple groups of CSI prediction results and CSI measurement results, whether prediction of the prediction model is accurate is described below by using an example.

For example, determining is performed for the comparison result between each of the multiple groups of CSI prediction results and CSI measurement results based on the foregoing determining criteria for the foregoing group of CSI prediction result and CSI measurement result. If a ratio of inaccurate CSI prediction results is greater than or equal to the threshold #3, it is determined that the prediction of the prediction model is inaccurate.

Alternatively, if a statistic (for example, a weighted average value) of differences between the multiple groups of CSI prediction results and CSI measurement results is greater than or equal to a threshold corresponding to the differences, it is determined that the prediction of the prediction model is inaccurate.

Alternatively, if a statistic (for example, a weighted average value) of channel correlations between the multiple groups of CSI prediction results and CSI measurement results is less than or equal to a threshold corresponding to the channel correlations, it is determined that the prediction of the prediction model is inaccurate.

Alternatively, if a statistic (for example, a weighted average value) of differences between the multiple groups of CSI prediction results and CSI measurement results is greater than or equal to a threshold corresponding to the differences, and a statistic (for example, a weighted average value) of channel correlations between the multiple groups of CSI prediction results and CSI measurement results is less than or equal to a threshold corresponding to the channel correlations, it is determined that the prediction of the prediction model is inaccurate.

Alternatively, if a statistic (for example, a weighted average value) of differences between the multiple groups of CSI prediction results and CSI measurement results is greater than or equal to a threshold corresponding to the differences, or a statistic (for example, a weighted average value) of channel correlations between the multiple groups of CSI prediction results and CSI measurement results is less than or equal to a threshold corresponding to the channel correlations, it is determined that the prediction of the prediction model is inaccurate.

When the comparison result between the multiple groups of CSI measurement results and CSI prediction results does not meet the foregoing condition, the terminal device may determine that the prediction of the prediction model is accurate. To avoid repetition, details are not described herein again.

It should be understood that the foregoing determining manners are merely examples. For another determining manner, refer to the descriptions in the method 500. To avoid repetition, details are not described herein again.

S83: The terminal device may send indication information #1 to the network device at the moment t1, to indicate at least one piece of CSI.

In other words, the terminal device may feed back the at least one piece of CSI to the network device at the moment t1.

If it is determined that the prediction of the prediction model is accurate, the terminal device may report, at the moment t1, only predicted CSI at a moment t2", namely, a CSI prediction result (an example of the p pieces of predicted channel information) at the moment t2". For example, the CSI measured at the moment t1' and CSI measured at m-1 moments before the moment t1' are input into the prediction model, to obtain the predicted CSI at the moment t2". The moment t2 "is later than the moment t1." For example, as shown in FIG. 9, t2"=t1+t'.

If it is determined that the prediction of the prediction model is inaccurate, the terminal device may report, at the moment t1, the CSI measured at the moment t1', that is, the CSI measurement result at the moment t1'. Alternatively, the terminal device may report, at the moment t1, the CSI measurement result at the moment t1' and the CSI prediction result at the moment t2".

For example, the indication information #1 may further indicate a label of the at least one piece of feedback CSI.

For example, the indication information #1 may further indicate the time reference point of the p pieces of predicted channel information.

Optionally, the terminal device may further send indication information #2. The indication information #2 indicates the comparison result.

S84: The network device performs data transmission based on the indication information #1.

For example, the indication information #1 may further indicate the label of the at least one piece of feedback CSI. In this case, the network device may parse the indication information #1, to determine whether the at least one piece of CSI indicated by the indication information #1 each is a measurement result or a prediction result.

If the at least one piece of CSI includes the measurement result, namely, the CSI measurement result at the moment t1', the network device may perform data transmission by using the CSI measurement result at the moment t1'.

If the at least one piece of CSI does not include the measurement result, but includes only the prediction result, namely, the CSI prediction result at the moment t2", the network device may perform data transmission by using the CSI prediction result at the moment t2".

In some possible scenarios, the terminal device may predict CSI at multiple future moments.

FIG. 10 is a diagram of another CSI feedback procedure. In the CSI feedback procedure shown in FIG. 10, the terminal device may predict CSI at multiple future moments, and may feed back the predicted CSI at the multiple future moments to the network device by performing the CSI feedback procedure once. The terminal device may monitor accuracy of a part of the CSI prediction results.

As shown in FIG. 10, feedback moments may include t0, t1, and t2. The moment t0 is earlier than the moment t1, and the moment t2 is later than the moment t1. t0, t1, and t2 may be adjacent feedback moments, or may be non-adjacent feedback moments.

The method 500 is described below by using CSI fed back at the moment t1 as an example.

S91: The terminal device receives, at a moment t1', a CSI-RS (an example of a reference signal #1) sent by the network device.

The terminal device may measure CSI based on the CSI-RS, to obtain CSI measured at the moment t1 (an example of channel information measured based on the reference information #1). The moment t1' is earlier than the moment t1. The CSI-RS is a CSI-RS shown by a solid arrow in FIG. 10.

The CSI measured at the moment t1' may also be referred to as a CSI measurement result at the moment t1'.

S92: The terminal device compares the CSI (an example of the n pieces of measured channel information) measured at the moment t1' with CSI (an example of the n pieces of predicted channel information) at a moment t1" that is predicted before the moment t1". In this case, n may be 1.

The predicted CSI at the moment t1" may also be referred to as a CSI prediction result at the moment t1".

For example, as shown in FIG. 10, t1"=t0+t'. In this case, t' may represent a time difference between the moment corresponding to the predicted CSI and the CSI feedback moment. If t0 and t1 are adjacent feedback moments, t' is a value less than a feedback interval.

It should be understood that, in FIG. 10, the predicted CSI at the moment t1" is CSI fed back to the network device at the moment t0. In another possible implementation, the predicted CSI at the moment t1" may alternatively be CSI fed back to the network device at another moment that is before the moment t1 and that is other than the moment t0.

For the CSI measured at the moment t1', a moment corresponding to the CSI is the moment t1'. For the predicted CSI at the moment t1", a moment corresponding to the CSI is the moment t1".

For example, a difference between t1' and t1" is less than or equal to a threshold #1. For example, t1'=t1".

The predicted CSI at the moment t1" is obtained through prediction by using a prediction model. A result of the comparison may be used to reflect performance of the prediction model.

In the procedure shown in FIG. 10, the prediction model is used to predict the CSI at the multiple future moments. The terminal device may monitor accuracy of a part of the CSI prediction results in the predicted CSI at the multiple future moments.

An example in which the prediction model is used to predict CSI at two future moments is used below for description. One or more pieces of measured CSI before a moment t1‴ are input into the prediction model, and the prediction model may output predicted CSI at the moment t1‴ and the predicted CSI at the moment t1". In other words, the CSI prediction result at the moment t1‴ and the CSI prediction result at the moment t1" may be obtained through prediction based on the same input. The moment t1‴ is earlier than the moment t1". For example, as shown in FIG. 10, t1‴=t0+t". t" may represent a time difference between a moment corresponding to the predicted CSI and the CSI feedback moment. t"<t'. The terminal device may monitor accuracy of a part of the CSI prediction result at the moment t1‴ and the CSI prediction result at the moment t1" (for example, the CSI prediction result at the moment t1").

The terminal device may determine accuracy of the CSI prediction result based on a comparison result.

For a specific determining manner, refer to the related descriptions in FIG. 9. To avoid repetition, details are not described herein again.

S93: The terminal device may send indication information #1 to the network device at the moment t1, to indicate at least one piece of CSI.

In other words, the terminal device may feed back the at least one piece of CSI to the network device at the moment t1.

If it is determined that the prediction of the prediction model is accurate, the terminal device may report, at the moment t1, only predicted CSI at a moment t2" and predicted CSI at a moment t2‴, namely, a CSI prediction result at the moment t2" and a CSI prediction result at the moment t2‴ (an example of the p pieces of predicted channel information). In this case, p is 2.

For example, the CSI measured at the moment t1' and the CSI measured at the m-1 moments before the moment t1' are input into the prediction model, to obtain the CSI prediction result at the moment t2" and the CSI prediction result at the moment t2‴. The moment t2‴ and the moment t2" are later than the moment t1'. For example, as shown in FIG. 10, t2"=t1+t', and t2‴=t1+t".

If it is determined that the prediction of the prediction model is inaccurate, the terminal device may report, at the moment t1, the CSI measured at the moment t1', that is, the CSI measurement result at the moment t1'. Alternatively, the terminal device may report, at the moment t1, the CSI measurement result at the moment t1', the CSI prediction result at the moment t2", and the CSI prediction result at the moment t2‴.

The indication information #1 may further indicate a label and/or a time reference point of the at least one piece of fed-back CSI. For specific descriptions, refer to the related descriptions in the method 500 or FIG. 9.

Optionally, the terminal device may further send indication information #2. The indication information #2 indicates the comparison result.

S94: The network device performs data transmission based on the indication information #1.

If the at least one piece of CSI includes the measurement result, namely, the CSI measurement result at the moment t1', the network device may perform data transmission by using the CSI measurement result at the moment t1'.

If the at least one piece of CSI does not include the measurement result, but includes only the prediction result, namely, the CSI prediction result at the moment t2" and the CSI prediction result at the moment t2‴, the network device may perform data transmission by using the CSI prediction result at the moment t2" or the CSI prediction result at the moment t2‴.

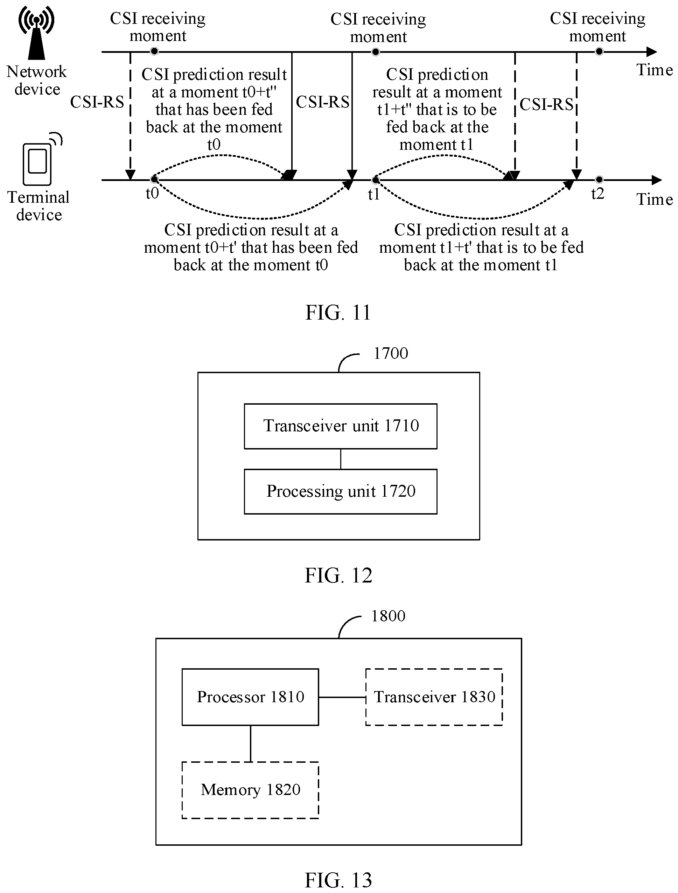

FIG. 11 is a diagram of still another CSI feedback procedure. In the CSI feedback procedure shown in FIG. 11, the terminal device may predict CSI at multiple future moments, and may feed back the predicted CSI at the multiple future moments to the network device by performing the CSI feedback procedure once. A main difference between the feedback procedure shown in FIG. 11 and the feedback procedure shown in FIG. 10 lies in that, in the feedback procedure shown in FIG. 11, the terminal device monitors accuracy of all CSI prediction results in the predicted CSI at the multiple future moments. To avoid repetition, the following mainly describes a part of the difference between FIG. 11 and FIG. 10. For the other part, refer to the related descriptions in FIG. 10.

The method 500 is described below by using CSI fed back at the moment t1 as an example.

S11: The terminal device receives, at a moment t1', a CSI-RS (an example of a reference signal #1) sent by the network device. The terminal device receives, at a moment t1‴', the CSI-RS sent by the network device.

The terminal device may separately measure CSI based on two CSI-RSs, to obtain CSI measured at the moment t1' (an example of channel information measured based on the reference information #1) and CSI measured at the moment t1‴'. The moment t1‴' and the moment t1' are earlier than the moment t1'. The two CSI-RSs are two CSI-RSs shown by solid arrows in FIG. 11.

The CSI measured at the moment t1' may also be referred to as a CSI measurement result at the moment t1'. The CSI measured at the moment t1‴' may also be referred to as a CSI measurement result at the moment t1‴'.

S12: The terminal device compares the CSI measured at the moment t1' with CSI at a moment t1" that is predicted before the moment t1", and compares the CSI measured at the moment t1‴' (an example of the n pieces of measured channel information) with CSI at a moment t1" that is predicted before the moment t1‴' (an example of the n pieces of predicted channel information).

The CSI measured at the moment t1' and the CSI measured at the moment t1‴' are an example of the n pieces of measured channel information. The predicted CSI at the moment t1" and the predicted CSI at the moment t1‴ are an example of the n pieces of predicted channel information. In this case, n may be 2.

The predicted CSI at the moment t1" may also be referred to as a CSI prediction result at the moment t1". The predicted CSI at the moment t1‴ may also be referred to as a CSI prediction result at the moment t1‴.

For example, as shown in FIG. 11, t1"=t0+t', and t1‴'=t0+t".

As shown in FIG. 11, the predicted CSI at the moment t1" and the predicted CSI at the moment t1‴ may be CSI fed back to the network device at the moment t0. In another implementation, the predicted CSI at the moment t1" and the predicted CSI at the moment t1‴ may alternatively be fed back to the network device at another moment.

For the CSI measured at the moment t1', a moment corresponding to the CSI is the moment t1'. For the predicted CSI at the moment t1", a moment corresponding to the CSI is the moment t1". For the CSI measured at the moment t1‴', a moment corresponding to the CSI is the moment t1‴'. For the predicted CSI at the moment t1‴, a moment corresponding to the CSI is the moment t1".

For example, a difference between t1' and t1" is less than or equal to a threshold #1. A difference between t1‴ and t1‴' is less than or equal to the threshold #1. For example, t1'=t1", and t1‴=t1‴'.

For a manner of determining the predicted CSI at the moment t1" and the predicted CSI at the moment t1‴, refer to the related descriptions in FIG. 10. Details are not described herein again. The terminal device may monitor accuracy of the CSI prediction result at the moment t1‴ and the CSI prediction result at the moment t1".

The terminal device may determine accuracy of the CSI prediction result based on a comparison result.

A case the terminal device determines, based on a comparison result between multiple groups of CSI prediction results and CSI measurement results, whether prediction of the prediction model is accurate is described below by using an example.

For example, if a statistic (for example, a smallest value or an average value) of differences between the multiple groups of CSI prediction results and CSI measurement results is greater than or equal to a threshold corresponding to the differences, it is determined that the prediction of the prediction model is inaccurate.

Alternatively, if a statistic (for example, a largest value or an average value) of channel correlations between the multiple groups of CSI prediction results and CSI measurement results is less than or equal to a threshold corresponding to the channel correlations, it is determined that the prediction of the prediction model is inaccurate.

Alternatively, if a statistic (for example, a smallest value or an average value) of differences between the multiple groups of CSI prediction results and CSI measurement results is greater than or equal to a threshold corresponding to the differences, and a statistic (for example, a largest value or an average value) of channel correlations between the multiple groups of CSI prediction results and CSI measurement results is less than or equal to a threshold corresponding to the channel correlations, it is determined that the prediction of the prediction model is inaccurate.

Alternatively, if a statistic (for example, a weighted average value) of differences between the multiple groups of CSI prediction results and CSI measurement results is greater than or equal to a threshold corresponding to the differences, or a statistic (for example, a weighted average value) of channel correlations between the multiple groups of CSI prediction results and CSI measurement results is less than or equal to a threshold corresponding to the channel correlations, it is determined that the prediction of the prediction model is inaccurate.

It should be understood that the multiple groups of CSI prediction results and CSI measurement results may be multiple CSI prediction results obtained through one time of prediction and CSI measurement results corresponding to the multiple CSI prediction results. For example, the multiple groups of CSI prediction results and CSI measurement results may be: the predicted CSI at the moment t1", the predicted CSI at the moment t1‴, and CSI measurement results corresponding to the predicted CSI at the moment t1" and the predicted CSI at the moment t1‴, namely, the CSI measured at the moment t1" and the CSI measured at the moment t1‴. Alternatively, the multiple groups of CSI prediction results and CSI measurement results may be multiple CSI prediction results obtained through multiple times of prediction and CSI measurement results corresponding to the multiple CSI prediction results. For example, the multiple groups of CSI prediction results and CSI measurement results may be: the predicted CSI at the moment t1", the predicted CSI at the moment t1‴, predicted CSI at a moment t0", predicted CSI at a moment t0‴, and CSI measurement results that are corresponding to the predicted CSI at the moment t1", the predicted CSI at the moment t1‴, the predicted CSI at the moment t0", and the predicted CSI at the moment t0‴. The predicted CSI at the moment t0" and the predicted CSI at the moment t0‴ may be obtained by the prediction model through prediction based on a same input. For a specific prediction manner, refer to the foregoing descriptions. Details are not described herein again.

For example, when the multiple groups of CSI prediction results and CSI measurement results are multiple CSI prediction results obtained through multiple times of prediction and CSI measurement results corresponding to the multiple CSI prediction results, determining may be performed, based on any one of the foregoing four determining manners, for multiple CSI prediction results obtained through each time of prediction and CSI measurement results corresponding to the multiple CSI prediction results. If a ratio of a quantity of times of inaccurate prediction in a total quantity of times of the prediction is greater than or equal to a threshold #4, it is determined that the prediction of the prediction model is inaccurate.

When the comparison result between the multiple groups of CSI measurement results and CSI prediction results does not meet the foregoing condition, the terminal device may determine that the prediction of the prediction model is accurate. To avoid repetition, details are not described herein again.

It should be understood that the foregoing is merely an example. For another determining manner, refer to the related descriptions in the method 500. To avoid repetition, details are not described herein again.

S13: The terminal device may send indication information #1 to the network device at the moment t1, to indicate at least one piece of CSI.

For descriptions of the at least one piece of CSI, refer to the related descriptions in FIG. 10. Details are not described herein again.

Optionally, the terminal device may further send indication information #2. The indication information #2 indicates the comparison result.

S14: The network device performs data transmission based on the indication information #1.

For a specific implementation of step S14, refer to the related descriptions in FIG. 10. Details are not described herein again.

It should be understood that the methods shown in FIG. 8 to FIG. 11 are merely examples, and constitute no limitation on the solutions in embodiments of this application.

It may be further understood that the information names used in some of the foregoing embodiments are merely examples and do not constitute a limitation on the protection scope of embodiments of this application.

It may be further understood that the formulas used in embodiments of this application are merely examples for description and do not constitute a limitation on the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be further understood that some optional features in embodiments of this application may be independent of other features in some scenarios, or may be combined with other features in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in the foregoing method embodiments, methods and operations implemented by a device may alternatively be implemented by a component (for example, a chip or a circuit) of the device.

Corresponding to the methods provided in the foregoing method embodiments, an embodiment of this application further provides a corresponding apparatus.

The apparatus includes a corresponding module configured to perform the foregoing method embodiments. The module may be software, hardware, or a combination of the software and the hardware. It may be understood that the technical features described in the foregoing method embodiments are also applicable to the following apparatus embodiments.

FIG. 12 is a diagram of a communication apparatus 1700 according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface, a communication unit, or the like. The processing unit 1720 may be configured to implement a corresponding processing function, for example, configure a resource. The processing unit 1720 may also be referred to as a processor or the like.

Optionally, the apparatus 1700 further includes a storage unit. The storage unit may be configured to store instructions and/or data. The processing unit 1720 may read the instructions and/or the data in the storage unit, so that the apparatus implements actions of a device or a network element in the foregoing method embodiments.

The communication apparatus 1700 may be a terminal device, or may be a communication apparatus that is used in the terminal device or used in cooperation with the terminal device and that can implement a communication method performed on a terminal device side. Alternatively, the communication apparatus 1700 may be an access network device, or may be a communication apparatus that is used in a network device or used in cooperation with the network device and that can implement a communication method performed on a network device side.

When the communication apparatus 1700 is used in the terminal device, the apparatus 1700 may implement steps or procedures performed by the terminal device (for example, the first device or the second device) in the foregoing method embodiments. The transceiver unit 1710 may be configured to perform sending/receiving-related operations of the terminal device in the foregoing method embodiments. The processing unit 1720 may be configured to perform processing-related operations of the terminal device in the foregoing method embodiments.

When the communication apparatus 1700 is used in a network device, the apparatus 1700 may implement steps or procedures performed by the network device (for example, the first device or the second device) in the foregoing method embodiments. The transceiver unit 1710 may be configured to perform sending/receiving-related operations of the network device in the foregoing method embodiments. The processing unit 1720 may be configured to perform processing-related operations of the network device in the foregoing method embodiments.

It should be understood that a specific process in which the units perform the foregoing corresponding steps is described in detail in the foregoing method embodiments. For brevity, details are not described herein.

It should be further understood that the apparatus 1700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1700 may be specifically the terminal device in the foregoing embodiments, and may be configured to perform the procedures and/or the steps corresponding to the terminal device in the foregoing method embodiments. Alternatively, the apparatus 1700 may be specifically the network device in the foregoing embodiments, and may be configured to perform the procedures and/or the steps corresponding to the network device in the foregoing method embodiments. To avoid repetition, details are not described herein again.

The apparatus 1700 in the foregoing solutions has functions of implementing corresponding steps performed by a device (for example, the terminal device, or for another example, the network device) in the foregoing methods. The functions may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a sending machine, and a receiving unit in the transceiver unit may be replaced with a receiving machine), and another unit, for example, the processing unit, may be replaced with a processor, to separately perform receiving/sending operations and related processing operations in the method embodiments.

In addition, the transceiver unit 1710 may alternatively be a transceiver circuit (for example, may include a receiver circuit and a transmitter circuit), and the processing unit may be a processing circuit.

It should be noted that the apparatus in FIG. 12 may be the network element or the device in the foregoing embodiments, or may be a chip or a chip system, for example, a system on a chip (system on chip, SoC). The transceiver unit may be an input/output circuit or a communication interface. The processing unit is a processor, a microprocessor, or an integrated circuit integrated on the chip. This is not limited herein.

FIG. 13 is a diagram of another communication apparatus 1800 according to an embodiment of this application. The apparatus 1800 includes a processor 1810. The processor 1810 is configured to execute a computer program or instructions stored in a memory 1820, or read data or signaling stored in the memory 1820, to perform the methods in the foregoing method embodiments. Optionally, there are one or more processors 1810.

Optionally, as shown in FIG. 13, the apparatus 1800 further includes the memory 1820, and the memory 1820 is configured to store the computer program or the instructions and/or the data. The memory 1820 may be integrated with the processor 1810, or may be disposed separately. Optionally, there are one or more memories 1820.

Optionally, as shown in FIG. 13, the apparatus 1800 further includes a transceiver 1830, and the transceiver 1830 is configured to send and/or receive a signal. For example, the processor 1810 is configured to control the transceiver 1830 to send and/or receive the signal.

In a solution, the communication apparatus 1800 may be used in a terminal device. Specifically, the communication apparatus 1800 may be a terminal device, or may be an apparatus that can support the terminal device in implementing a function of the terminal device (for example, the first device or the second device) in any one of the foregoing examples. The apparatus 1800 is configured to implement operations performed by the terminal device (for example, the first device or the second device) in the foregoing method embodiments.

For example, the processor 1810 is configured to execute the computer program or the instruction stored in the memory 1820, to implement related operations of the terminal device (for example, the first device or the second device) in the foregoing method embodiments.

In another solution, the communication apparatus 1800 may be used in a network device. Specifically, the communication apparatus 1800 may be a network device, or may be an apparatus that can support the network device in implementing a function of the network device (for example, the first device or the second device) in any one of the foregoing examples. The apparatus 1800 is configured to implement operations performed by the network device (for example, the first device or the second device) in the foregoing method embodiments.

For example, the processor 1810 is configured to execute the computer program or the instruction stored in the memory 1820, to implement related operations of the network device (for example, the first device or the second device) in the foregoing method embodiments.

It should be understood that the processor mentioned in embodiments of this application may be a central processing unit (central processing unit, CPU), or may be another general-purpose processor, a digital signal processor (digital signal processor, DSP), an ASIC, a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than a limitation, the RAM includes the following multiple forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

An embodiment of this application further provides a computer-readable storage medium. The computer-readable storage medium stores computer instructions for implementing a method performed by a communication device in the foregoing method embodiments.

For example, when a computer program is executed by a computer, the computer is enabled to implement the method performed by the first device in the foregoing method embodiments.

For another example, when a computer program is executed by a computer, the computer is enabled to implement the method performed by the second device in the foregoing method embodiments.

An embodiment of this application further provides a computer program product, including instructions. When the instructions are executed by a computer, the method performed by a device (for example, the first device or the second device) in the foregoing method embodiments is implemented.

An embodiment of this application further provides a communication system, including the foregoing first device and second device. The first device and the second device may implement the communication method shown in any one of the foregoing examples in FIG. 5 to FIG. 11.

Optionally, the system further includes a device that communicates with the foregoing first device and/or second device.

For explanations and beneficial effects of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, the unit division is merely logical function division, and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving a first reference signal from a first device;
   determining whether p pieces of predicted channel information are valid; and
   sending first indication information to the first device, wherein the first indication information indicates at least one piece of channel information, wherein
   when it is determined that the p pieces of predicted channel information are valid, the at least one piece of channel information comprises the p pieces of predicted channel information; or
   when it is determined that the p pieces of predicted channel information are invalid, the at least one piece of channel information comprises channel information measured based on the first reference signal and the p pieces of predicted channel information, or the at least one piece of channel information comprises the channel information measured based on the first reference signal, wherein p is a positive integer, and a moment corresponding to the p pieces of predicted channel information is not earlier than a sending moment of the first indication information.

2. The method according to claim 1, wherein determining whether the p pieces of predicted channel information are valid comprises:
   determining, based on a comparison result between n pieces of predicted channel information and n pieces of measured channel information, whether the p pieces of predicted channel information are valid, wherein the n pieces of predicted channel information are corresponding to the n pieces of measured channel information, n is a positive integer, and a moment corresponding to the n pieces of predicted channel information is earlier than the sending moment of the first indication information.

3. The method according to claim 2, wherein an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

4. The method according to claim 2 or 3, wherein the n pieces of measured channel information comprise the channel information measured based on the first reference signal.

5. The method according to any one of claims 2 to 4, wherein the comparison result between the n pieces of predicted channel information and the n pieces of measured channel information comprises any one of the following:
a difference between the n pieces of predicted channel information and the n pieces of measured channel information, or a channel correlation between the n pieces of predicted channel information and the n pieces of measured channel information.

6. The method according to claim 5, wherein the difference between the n channel information prediction results and the n channel information measurement results comprises at least one of the following: a mean square error between the n channel information prediction results and the n channel information measurement results, or a normalized error between the n channel information prediction results and the n channel information measurement results.

7. The method according to claim 5 or 6, wherein the channel correlation between the n channel information prediction results and the n channel information measurement results comprises at least one of the following: a generalized cosine similarity between the n channel information prediction results and the n channel information measurement results, or a squared generalized cosine similarity between the n channel information prediction results and the n channel information measurement results.

8. The method according to any one of claims 5 to 7, wherein n=1, and it is determined that the p pieces of predicted channel information are invalid when the comparison result between the n pieces of predicted channel information and the n pieces of measured channel information satisfies any one of the following:

the difference between the n pieces of predicted channel information and the n pieces of measured channel information is greater than or equal to a threshold corresponding to the difference;
the channel correlation between the n pieces of predicted channel information and the n pieces of measured channel information is less than or equal to a threshold corresponding to the channel correlation;
the difference between the n pieces of predicted channel information and the n pieces of measured channel information is greater than or equal to a threshold corresponding to the difference, and the channel correlation between the n pieces of predicted channel information and the n pieces of measured channel information is less than or equal to a threshold corresponding to the channel correlation; or
the difference between the n pieces of predicted channel information and the n pieces of measured channel information is greater than or equal to a threshold corresponding to the difference, or the channel correlation between the n pieces of predicted channel information and the n pieces of measured channel information is less than or equal to a threshold corresponding to the channel correlation.

9. The method according to any one of claims 5 to 7, wherein n>1, and it is determined that the p pieces of predicted channel information are invalid when the comparison result between the n pieces of predicted channel information and the n pieces of measured channel information satisfies any one of the following:

a statistic of the differences between the n pieces of predicted channel information and the n pieces of measured channel information is greater than or equal to a threshold corresponding to the differences;
a statistic of the channel correlations between the n pieces of predicted channel information and the n pieces of measured channel information is less than or equal to a threshold corresponding to the channel correlations;
a statistic of the differences between the n pieces of predicted channel information and the n pieces of measured channel information is greater than or equal to a threshold corresponding to the differences, and a statistic of the channel correlations between the n pieces of predicted channel information and the n pieces of measured channel information is less than or equal to a threshold corresponding to the channel correlations; or
a statistic of the differences between the n pieces of predicted channel information and the n pieces of measured channel information is greater than or equal to a threshold corresponding to the differences, or a statistic of the channel correlations between the n pieces of predicted channel information and the n pieces of measured channel information is less than or equal to a threshold corresponding to the channel correlations.

10. The method according to any one of claims 5 to 7, wherein n>1, and it is determined that the p pieces of predicted channel information are invalid when the comparison result between the n pieces of predicted channel information and the n pieces of measured channel information satisfies any one of the following:

> a difference between y pieces of predicted channel information in the n pieces of predicted channel information and y pieces of measured channel information in the n pieces of measured channel information is greater than or equal to a threshold corresponding to the difference, wherein a ratio of y to n is greater than or equal to a second threshold, y is an integer greater than or equal to 0, and the y pieces of predicted channel information are corresponding to the y pieces of measured channel information;
> a channel correlation between y pieces of predicted channel information in the n pieces of predicted channel information and y pieces of measured channel information in the n pieces of measured channel information is less than or equal to a threshold corresponding to the channel correlation, wherein a ratio of y to n is greater than or equal to a second threshold, y is an integer greater than or equal to 0, and the y pieces of predicted channel information are corresponding to the y pieces of measured channel information;
> a difference between y pieces of predicted channel information in the n pieces of predicted channel information and y pieces of measured channel information in the n pieces of measured channel information is greater than or equal to a threshold corresponding to the difference, and a channel correlation between the y pieces of predicted channel information and the y pieces of measured channel information is less than or equal to a threshold corresponding to the channel correlation, wherein a ratio of y to n is greater than or equal to a second threshold, y is an integer greater than or equal to 0, and the y pieces of predicted channel information are corresponding to the y pieces of measured channel information; or
> a difference between y pieces of predicted channel information in the n pieces of predicted channel information and y pieces of measured channel information in the n pieces of measured channel information is greater than or equal to a threshold corresponding to the difference, or a channel correlation between the y pieces of predicted channel information and the y pieces of measured channel information is less than or equal to a threshold corresponding to the channel correlation, wherein a ratio of y to n is greater than or equal to a second threshold, y is an integer greater than or equal to 0, and the y pieces of predicted channel information are corresponding to the y pieces of measured channel information.

11. The method according to any one of claims 2 to 10, wherein the method further comprises:
sending second indication information to the first device, wherein the second indication information indicates the comparison result.

12. The method according to any one of claims 1 to 11, wherein the p pieces of predicted channel information are obtained through prediction based on m pieces of measured channel information, the m pieces of measured channel information comprise the channel information measured based on the first reference signal, and m is a positive integer.

13. The method according to any one of claims 1 to 12, wherein the first indication information further indicates a label of the at least one piece of channel information, and the label of the at least one piece of channel information respectively indicates that the at least one piece of channel information is a prediction result or a measurement result.

14. The method according to any one of claims 1 to 13, wherein when the at least one piece of channel information comprises the p pieces of predicted channel information or the at least one piece of channel information comprises the channel information measured based on the first reference signal and the p pieces of predicted channel information, the first indication information further indicates the moment corresponding to the p pieces of predicted channel information.

15. A communication method, wherein the method comprises:

> receiving first indication information from a second device, wherein the first indication information indicates at least one piece of channel information and a label of the at least one piece of channel information, and the label of the at least one piece of channel information respectively indicates that the at least one piece of channel information is a prediction result or a measurement result; and

performing data transmission based on the at least one piece of channel information.

16. The method according to claim 15, wherein the method further comprises:

sending a first reference signal to the second device, wherein

when p pieces of predicted channel information are valid, the at least one piece of channel information comprises the p pieces of predicted channel information; or

when p pieces of predicted channel information are invalid, the at least one piece of channel information comprises channel information measured based on the first reference signal and the p pieces of predicted channel information, or the at least one piece of channel information comprises the channel information measured based on the first reference signal; and

a moment corresponding to the p pieces of predicted channel information is not earlier than a sending moment of the first indication information, and p is a positive integer.

17. The method according to claim 16, wherein performing data transmission based on the at least one piece of channel information comprises:

when the at least one piece of channel information comprises the channel information measured based on the first reference signal, performing data transmission based on the channel information measured based on the first reference signal; or when the at least one piece of channel information does not comprise the channel information measured based on the first reference signal, performing data transmission based on the p pieces of predicted channel information.

18. The method according to claim 16, wherein performing data transmission based on the at least one piece of channel information comprises:

determining, based on the label of the at least one piece of channel information, that the at least one piece of channel information comprises the measurement result, and performing data transmission based on the channel information measured based on the first reference signal; or determining, based on the label of the at least one piece of channel information, that the at least one piece of channel information does not comprise the measurement result, and performing data transmission based on the p pieces of predicted channel information.

19. The method according to any one of claims 16 to 18, wherein when the at least one piece of channel information comprises the p pieces of predicted channel information or the at least one piece of channel information comprises the channel information measured based on the first reference signal and the p pieces of predicted channel information, the first indication information further indicates the moment corresponding to the p pieces of predicted channel information.

20. The method according to any one of claims 16 to 19, wherein the p pieces of predicted channel information are obtained through prediction based on m pieces of measured channel information, the m pieces of measured channel information comprise the channel information measured based on the first reference signal, and m is a positive integer.

21. The method according to any one of claims 16 to 20, wherein the p pieces of predicted channel information are valid or the p pieces of predicted channel information are invalid based on a comparison result between n pieces of predicted channel information and n pieces of measured channel information, the n pieces of predicted channel information are corresponding to the n pieces of measured channel information, n is a positive integer, and a moment corresponding to the n pieces of predicted channel information is earlier than the sending moment of the first indication information.

22. The method according to claim 21, wherein an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

23. The method according to claim 21 or 22, wherein the n pieces of measured channel information comprise the channel information measured based on the first reference signal.

24. The method according to any one of claims 21 to 23, wherein the comparison result between the n pieces of predicted channel information and the n pieces of measured channel information comprises any one of the following: a difference between the n pieces of predicted channel information and the n pieces of measured channel information, or a channel correlation between the n pieces of predicted channel information and the n pieces of measured channel information.

**25.** The method according to any one of claims 21 to 24, wherein the method further comprises:
receiving second indication information from the second device, wherein the second indication information indicates the comparison result.

**26.** A communication method, comprising:

sending a second reference signal to a second device;
receiving third indication information from the second device, wherein the third indication information indicates q pieces of predicted channel information, a moment corresponding to the q pieces of predicted channel information is not earlier than a sending moment of the third indication information, and q is a positive integer;
sending a third reference signal to the second device; and
receiving fourth indication information from the second device, wherein the fourth indication information indicates channel information measured based on the third reference signal, or the fourth indication information indicates the channel information measured based on the third reference signal and q' predicted channel information, a moment corresponding to the q' predicted channel information is not earlier than a sending moment of the fourth indication information, and q' is a positive integer.

**27.** The method according to claim 26, wherein when the q pieces of predicted channel information are valid, the third indication information indicates the q pieces of predicted channel information; or when the q' pieces of predicted channel information are invalid, the fourth indication information indicates the channel information measured based on the third reference signal, or the fourth indication information indicates the channel information measured based on the third reference signal and the q' pieces of predicted channel information.

**28.** The method according to claim 26 or 27, wherein the q' pieces of predicted channel information are invalid based on a comparison result between r pieces of predicted channel information and r pieces of measured channel information, the r pieces of predicted channel information are corresponding to the r pieces of measured channel information, r is a positive integer, and a moment corresponding to the r pieces of predicted channel information is earlier than the sending moment of the fourth indication information.

**29.** A communication method, comprising:

sending a first reference signal to a second device; and
receiving first indication information from the second device, wherein the first indication information indicates at least one piece of channel information; and when p pieces of predicted channel information are valid, the at least one piece of channel information comprises the p pieces of predicted channel information; or when the p pieces of predicted channel information are invalid, the at least one piece of channel information comprises channel information measured based on the first reference signal and the p pieces of predicted channel information, or the at least one piece of channel information comprises the channel information measured based on the first reference signal, wherein p is a positive integer, and a moment corresponding to the p pieces of predicted channel information is not earlier than a sending moment of the first indication information.

**30.** The method according to claim 29, wherein the first indication information further indicates a label of the at least one piece of channel information, and the label of the at least one piece of channel information respectively indicates that the at least one piece of channel information is a prediction result or a measurement result.

**31.** The method according to claim 30, wherein the method further comprises:
determining, based on the label of the at least one piece of channel information, that the at least one piece of channel information comprises the measurement result, and performing data transmission based on the channel information measured based on the first reference signal; or determining, based on the label of the at least one piece of channel information, that the at least one piece of channel information does not comprise the measurement result, and performing data transmission based on the p pieces of predicted channel information.

**32.** The method according to claim 29 or 30, wherein the method further comprises:
when the at least one piece of channel information comprises the channel information measured based on the first reference signal, performing data transmission based on the channel information measured based on the first reference signal; or when the at least one piece of channel information does not comprise the channel information measured based on the first reference signal, performing data transmission based on the p pieces of predicted channel information.

**33.** The method according to any one of claims 29 to 32, wherein when the at least one piece of channel information comprises the p pieces of predicted channel information or the at least one piece of channel information comprises the channel information measured based on the first reference signal and the p pieces of predicted channel information, the first indication information further indicates the moment corresponding to the p pieces of predicted channel information.

34. The method according to any one of claims 29 to 33, wherein the p pieces of predicted channel information are obtained through prediction based on m pieces of measured channel information, the m pieces of measured channel information comprise the channel information measured based on the first reference signal, and m is a positive integer.

35. The method according to any one of claims 29 to 34, wherein the p pieces of predicted channel information are valid or the p pieces of predicted channel information are invalid based on a comparison result between n pieces of predicted channel information and n pieces of measured channel information, the n pieces of predicted channel information are corresponding to the n pieces of measured channel information, n is a positive integer, and a moment corresponding to the n pieces of predicted channel information is earlier than the sending moment of the first indication information.

36. The method according to claim 35, wherein an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

37. The method according to claim 35 or 36, wherein the n pieces of measured channel information comprise the channel information measured based on the first reference signal.

38. The method according to any one of claims 35 to 37, wherein the comparison result between the n pieces of predicted channel information and the n pieces of measured channel information comprises any one of the following: a difference between the n pieces of predicted channel information and the n pieces of measured channel information, or a channel correlation between the n pieces of predicted channel information and the n pieces of measured channel information.

39. A communication method, comprising:

receiving a first reference signal from a first device; and

determining, based on whether p pieces of predicted channel information are valid, to perform data transmission by using at least one of the p pieces of predicted channel information or channel information measured based on the first reference signal, wherein a moment corresponding to the p pieces of predicted channel information is later than a measurement moment of the first reference signal, and p is a positive integer.

40. The method according to claim 39, wherein when the p pieces of predicted channel information are invalid, data transmission is performed based on the channel information measured based on the first reference signal; or when the p pieces of predicted channel information are valid, data transmission is performed based on the p pieces of predicted channel information.

41. The method according to claim 39 or 40, wherein the method further comprises:

sending first indication information to the first device, wherein the first indication information indicates at least one piece of channel information, wherein when the p pieces of predicted channel information are valid, the at least one piece of channel information comprises the p pieces of predicted channel information; or when the p pieces of predicted channel information are invalid, the at least one piece of channel information comprises the channel information measured based on the first reference signal and the p pieces of predicted channel information, or the at least one piece of channel information comprises the channel information measured based on the first reference signal.

42. The method according to claim 41, wherein the p pieces of predicted channel information are valid or the p pieces of predicted channel information are invalid based on a comparison result between n pieces of predicted channel information and n pieces of measured channel information, the n pieces of predicted channel information are corresponding to the n pieces of measured channel information, n is a positive integer, and a moment corresponding to the n pieces of predicted channel information is earlier than a sending moment of the first indication information.

43. The method according to claim 42, wherein an $i^{th}$ piece of predicted channel information in the n pieces of predicted channel information is corresponding to an $i^{th}$ piece of measured channel information in the n pieces of measured channel information, a difference between a moment corresponding to the $i^{th}$ piece of predicted channel information and a moment corresponding to the $i^{th}$ piece of measured channel information is less than or equal to a first threshold, and i=1, 2, ..., n.

44. The method according to claim 42 or 43, wherein the n pieces of measured channel information comprise the channel information measured based on the first reference signal.

45. The method according to any one of claims 42 to 44, wherein the comparison result between the n pieces of predicted channel information and the n pieces of measured channel information comprises any one of the following: a difference between the n pieces of predicted channel information and the n pieces of measured channel information, or a channel correlation between the n pieces of predicted channel information and the n pieces of measured channel information.

46. The method according to any one of claims 39 to 45, wherein the p pieces of predicted channel information are obtained through prediction based on m pieces of measured channel information, and m is a positive integer.

47. The method according to claim 46, wherein the m pieces of measured channel information comprise the channel information measured based on the first reference signal.

48. The method according to any one of claims 41 to 47, wherein the first indication information further indicates a label of the at least one piece of channel information, and the label of the at least one piece of channel information respectively indicates that the at least one piece of channel information is a prediction result or a measurement result.

49. The method according to any one of claims 41 to 48, wherein when the at least one piece of channel information comprises the p pieces of predicted channel information or the at least one piece of channel information comprises the channel information measured based on the first reference signal and the p pieces of predicted channel information, the first indication information further indicates the moment corresponding to the p pieces of predicted channel information.

50. A communication apparatus, comprising a module for performing the method according to any one of claims 1 to 14, a module for performing the method according to any one of claims 15 to 25, a module for performing the method according to any one of claims 26 to 28, a module for performing the method according to any one of claims 29 to 38, or a module for performing the method according to any one of claims 39 to 49.

51. A computer-readable storage medium, wherein the computer-readable storage medium comprises instructions, and when the instructions are run by a processor, the method according to any one of claims 1 to 14 is implemented, the method according to any one of claims 15 to 25 is implemented, the method according to any one of claims 26 to 28 is implemented, the method according to any one of claims 29 to 38 is implemented, or the method according to any one of claims 39 to 49 is implemented.

52. A communication apparatus, wherein the communication apparatus comprises a processor and a storage medium, the storage medium stores instructions, and when the instructions are run by the processor, the method according to any one of claims 1 to 14 is implemented, the method according to any one of claims 15 to 25 is implemented, the method according to any one of claims 26 to 28 is implemented, the method according to any one of claims 29 to 38 is implemented, or the method according to any one of claims 39 to 49 is implemented.

53. A communication apparatus, comprising a processor, wherein the processor is configured to process data and/or information, to implement the method according to any one of claims 1 to 14, to implement the method according to any one of claims 15 to 25, to implement the method according to any one of claims 26 to 28, to implement the method according to any one of claims 29 to 38, or to implement the method according to any one of claims 39 to 49.

54. A chip, comprising a processor, wherein the processor is configured to run a program or instructions, to implement the method according to any one of claims 1 to 14, to implement the method according to any one of claims 15 to 25, to implement the method according to any one of claims 26 to 28, to implement the method according to any one of claims 29 to 38, or to implement the method according to any one of claims 39 to 49.

55. A computer program product, wherein the computer program product comprises computer program code or instructions, and when the computer program code or the instructions are run by a processor, the method according to any one of claims 1 to 14 is implemented, the method according to any one of claims 15 to 25 is implemented, the method according to any one of claims 26 to 28 is implemented, the method according to any one of claims 29 to 38 is implemented, or the method according to any one of claims 39 to 49 is implemented.

56. A communication system, comprising a combination of one or more of the following apparatuses: an apparatus for performing the method according to any one of claims 1 to 14, an apparatus for performing the method according to any one of claims 15 to 25, an apparatus for performing the method according to any one of claims 26 to 28, an apparatus for performing the method according to any one of claims 29 to 38, or an apparatus for performing the method according to any one of claims 39 to 49.

FIG. 1

FIG. 2

FIG. 3

FIG. 4

500

```
┌──────────┐                                    ┌──────────┐
│  Second  │                                    │  First   │
│  device  │                                    │  device  │
└──────────┘                                    └──────────┘
```

510: Send a first reference signal

┌─────────────────────────────┐
│ 520: Determine whether p     │
│ pieces of predicted channel  │
│ information are valid         │
└─────────────────────────────┘

Send indication information #1, where the indication information
#1 indicates at least one piece of channel information; and when
the p pieces of predicted channel information are valid, the at
least one piece of channel information includes the p pieces of
predicted channel information; or when the p pieces of predicted
channel information are invalid, the at least one piece of channel
information includes channel information measured based on the
first reference signal or includes the p pieces of predicted channel
information and the channel information measured based on the
first reference signal

┌─────────────────────────────┐
│ 540: Perform data            │
│ transmission based on         │
│ the at least one piece of    │
│ channel information           │
└─────────────────────────────┘

FIG. 5

600

```
┌─────────────────┐                                    ┌──────────────┐
│  Second device  │                                    │ First device │
└─────────────────┘                                    └──────────────┘
        │                                                      │
        │           610: Send a second reference signal        │
        │ ◄─────────────────────────────────────────────────── │
        │                                                      │
        │  620: Send indication information #4, where the indication information
        │  #4 indicates q pieces of predicted channel information, and a moment
        │  corresponding to the q pieces of predicted channel information is not
        │    earlier than a sending moment of the indication information #4
        │ ───────────────────────────────────────────────────► │
        │                                                      │
        │            630: Send a third reference signal         │
        │ ◄─────────────────────────────────────────────────── │
        │                                                      │
        │  640: Send indication information #5, where the indication information
        │     #5 indicates q' pieces of predicted channel information, or the
        │  indication information #5 indicates the q' pieces of predicted channel
        │    information and channel information measured based on the third
        │     reference signal, and a moment corresponding to the q' pieces of
        │  predicted channel information is not earlier than a sending moment of
        │               the indication information #5
        │ ───────────────────────────────────────────────────► │
        │                                                      │
```

FIG. 6

700

| Second device | | First device |

710: Send a first reference signal

720: Determine, based on a comparison result between n pieces of predicted channel information and n pieces of measured channel information, to perform data transmission by using at least one of p pieces of predicted channel information or channel information measured based on the first reference signal

730: Send indication information #1, where the indication information #1 indicates at least one piece of channel information, the at least one piece of channel information includes the p pieces of predicted channel information and/ or the channel information measured based on the first reference signal, and the at least one piece of channel information is determined based on the comparison result between the n pieces of predicted channel information and the n pieces of measured channel information

FIG. 7

CSI receiving moment

CSI receiving moment

CSI receiving moment

Time

CSI-RS

CSI-RS

CSI-RS

Terminal device

t0

t1

t2

Time

CSI at the moment t1 that is predicted at the moment t0

CSI at the moment t2 that is predicted at the moment t1

FIG. 8

FIG. 9

FIG. 10

FIG. 11

FIG. 12

FIG. 13

## INTERNATIONAL SEARCH REPORT

| International application No. |
| --- |
| **PCT/CN2023/140701** |

### A. CLASSIFICATION OF SUBJECT MATTER

H04B17/373(2015.01)i

According to International Patent Classification (IPC) or to both national classification and IPC

### B. FIELDS SEARCHED

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT, ENTXT, DWPI, CNKI, IEEE, 3GPP: 预测, 信道, 测量, 差异, 相关, 参考信号, 有效, 无效, 准确, 正确, 时刻, 时间, 传输, 余弦相似, CSI, predict+, measur+, MSE, NMSE, GCS, SGCS, AI, ML

### C. DOCUMENTS CONSIDERED TO BE RELEVANT

| Category* | Citation of document, with indication, where appropriate, of the relevant passages | Relevant to claim No. |
| --- | --- | --- |
| X | US 2021376895 A1 (QUALCOMM INC.) 02 December 2021 (2021-12-02) description, paragraphs 0063-0096 and 0109-0114, and figures 5-9 | 1-56 |
| A | CN 114402560 A (QUALCOMM INC.) 26 April 2022 (2022-04-26) entire document | 1-56 |
| A | US 2022386292 A1 (NOKIA TECHNOLOGIES OY) 01 December 2022 (2022-12-01) entire document | 1-56 |
| A | US 2021390434 A1 (QUALCOMM INC.) 16 December 2021 (2021-12-16) entire document | 1-56 |
| A | CN 110034792 A (CHINA MOBILE COMMUNICATIONS CO., LTD. RESEARCH INSTITUTE et al.) 19 July 2019 (2019-07-19) entire document | 1-56 |
| A | NOKIA et al. "Evaluation on ML for CSI feedback enhancement" *3GPP TSG RAN WG1 #109, R1-2204571*, 20 May 2022 (2022-05-20), sections 1-2 | 1-56 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 February 2024** | **01 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140701**

| Patent document cited in search report | | | Publication date (day/month/year) | Patent family member(s) | | | Publication date (day/month/year) |
|---|---|---|---|---|---|---|---|
| US | 2021376895 | A1 | 02 December 2021 | WO | 2021242393 | A1 | 02 December 2021 |
| | | | | EP | 4158810 | A1 | 05 April 2023 |
| | | | | CN | 11621018 | A | 02 June 2023 |
| | | | | IN | 202227054479 | A | 06 January 2023 |
| CN | 114402560 | A | 26 April 2022 | EP | 4032219 | A1 | 27 July 2022 |
| | | | | US | 2021091838 | A1 | 25 March 2021 |
| | | | | WO | 2021055510 | A1 | 25 March 2021 |
| | | | | IN | 202247006842 | A | 18 March 2022 |
| US | 2022386292 | A1 | 01 December 2022 | WO | 2022254086 | A1 | 08 December 2022 |
| US | 2021390434 | A1 | 16 December 2021 | None | | | |
| CN | 110034792 | A | 19 July 2019 | None | | | |

Form PCT/ISA/210 (patent family annex) (July 2022)

## EP 4 629 532 A1

**REFERENCES CITED IN THE DESCRIPTION**

**Patent documents cited in the description**

- CN 202211668669